# EUROPEAN PATENT SPECIFICATION

(11) **EP 3 110 164 B1**
(45) Date of publication and mention of the grant of the patent: **08.05.2019**
(21) Application number: 15844091.7
(22) Date of filing: 27.03.2015
(51) Int. Cl.: H04N 21/435

(54) **PROGRAM OUTPUT APPARATUS, PROGRAM MANAGEMENT SERVER, ASSISTANCE INFORMATION MANAGEMENT SERVER, METHOD FOR OUTPUTTING PROGRAM AND ASSISTANCE INFORMATION, AND STORAGE MEDIUM**
PROGRAMMAUSGABEVORRICHTUNG, PROGRAMMVERWALTUNGSSERVER, ASSISTENZINFORMATIONSVERWALTUNGSSERVER, VERFAHREN ZUR AUSGABE VON PROGRAMMEN UND ASSISTENZINFORMATIONEN UND SPEICHERMEDIUM
APPAREIL DE FOURNITURE DE PROGRAMME, SERVEUR DE GESTION DE PROGRAMME, SERVEUR DE GESTION D'INFORMATIONS D'ASSISTANCE, PROCÉDÉ POUR FOURNIR UN PROGRAMME ET DES INFORMATIONS D'ASSISTANCE, ET SUPPORT D'ENREGISTREMENT

(30) Priority: 26.09.2014 JP 2014196587
(43) Date of publication of application: 28.12.2016
(73) Proprietor: Astem Co., Ltd., Osaka-shi, Osaka 530-0044 (JP)
(72) Inventor: FUKUDOME, Masao, Osaka-shi Osaka 530-0044 (JP); NAKATANI, Akihiro, Osaka-shi Osaka 530-0044 (JP); SATO, Itaru, Osaka-shi Osaka 530-0044 (JP); OSHIMA, Yuzo, Osaka-shi Osaka 530-0044 (JP)
(74) Representative: Betten & Resch
(86) International application number: PCT/JP2015/059564
(87) International publication number: WO 2016/047177

(56) References cited:
- WO-A1-00/11869
- WO-A1-02/39289
- WO-A1-2013/119082
- WO-A1-2014/000703
- JP-A- H09 160 852
- JP-A- 2003 125 305
- JP-A- 2003 158 726
- JP-A- 2004 538 681
- JP-A- 2010 239 656
- JP-A- 2014 022 903
- JP-A- 2014 027 361
- US-A1- 2008 064 326
- US-A1- 2013 318 157

## Description

### Technical field

The present invention relates to a program system capable of acquiring, in response to reception of a program, assistance information such as captions corresponding to the program from a server or the like, and outputting the assistance information together with the program.

### Background Art

Conventionally, a transmitting and receiving system for people with hearing disabilities and elderly people with impaired hearing has been proposed that can cause a receiving apparatus to output assistance information according to the degree of disability together with program information (see paragraph [0008] and FIGS. 1 and 2 of Patent Document 1). This assistance information is information such as captions or sign language video for assisting people with hearing disabilities with listening. The transmitting and receiving system is a system that causes a transmitting apparatus to transmit assistance information in addition to program information containing video and audio to the receiving apparatus and can cause the receiving apparatus to output the assistance information according to the degree of disability together with the program information.

Furthermore, in CS broadcasting, broadcasting of a program in which captions and sign language video are overlaid on video is performed, and is highly acclaimed by people with hearing disabilities and the like.

Patent Document 1: Japanese Patent No. 4292141

### Summary of Invention

### Technical Problem

With the recent widened use of IPTV (internet protocol television), there is a demand for techniques for outputting highly accessible assistance information in program providing services such as terrestrial broadcasting or IPTV. For example, there is a demand for techniques for, when program information is being transmitted from a transmitting apparatus of a broadcast station, allowing an assistance information providing organization to provide assistance information corresponding to the program information using a server or the like, and causing a receiving apparatus to receive the program information from the transmitting apparatus, acquire the assistance information corresponding to the program information from the server, and output the assistance information in association with the program information.

Conventional techniques for causing a receiving apparatus to output assistance information together with program information are techniques configured such that program information associated in advance with assistance information (assistance information-attached program information) is transmitted from a broadcast station to the receiving apparatus.

However, if no assistance information is associated with program information and assistance information is provided from an apparatus (e.g., a server) that is different from a transmitting apparatus of a broadcast station, assistance information corresponding to the program information that is being received cannot be acquired by a program output apparatus from the server unless the assistance information is associated with the program information. Furthermore, even if the program output apparatus acquires all pieces of assistance information from the server, the program output apparatus cannot output, together with the program information that is being received, assistance information corresponding to the program information.

That is to say, with conventional techniques for causing a receiving apparatus to output assistance information together with program information, it is not possible to perform the output if assistance information is provided from an apparatus (e.g., a server) that is different from a transmitting apparatus, that is, it is not possible to realize a required technique for outputting assistance

WO 2014/000703 A1 discloses a system for providing closed caption data from a caption server to a terminal wherein the terminal sends a request for closed caption data comprising a program identifier. In response to the request, stored closed caption data is is transmitted to the terminal.

WO 00/11869 A1 discloses an EPG server wherein the client may request program information by sending channel information and time information.

### Solution to Problem

The invention is defined in independent claim 1, while advantageous embodiments are set out in the dependent claims. A first example is directed to a program output apparatus constituting a part of a program system including a first server, a second server, and the program output apparatus, wherein the first server includes: a first storage unit in which one or at least two pieces of program management information each having program identifying information for identifying a program, a channel identifier for identifying a channel on which the program is broadcasted, and broadcast timeslot information indicating a timeslot during which the program is broadcasted are stored; a first receiving unit that receives program specifying information containing a channel identifier of a program, from the program output apparatus; a first processing unit that acquires program identifying information corresponding to the channel identifier contained in the program specifying information and current time, from the first storage unit; and a first transmitting unit that transmits the program identifying information acquired by the first processing unit, to the program output apparatus, the second server includes: a second storage unit in which one or more pieces of assistance information associated with program identifying information are stored; a second receiving unit that receives an assistance information transmission instruction having program identifying information, from the program output apparatus; a second processing unit that acquires assistance information corresponding to the program identifying information contained in the assistance information transmission instruction, from the second storage unit; and a second transmitting unit that transmits the assistance information acquired by the second processing unit, to the program output apparatus, and the program output apparatus includes: a program receiving unit that receives a program; a channel identifier acquiring unit that acquires a channel identifier of the program that is being received by the program receiving unit; a program specifying information transmitting unit that transmits program specifying information containing the channel identifier, to the first server; a program identifying information acquiring unit that, in response to transmission of the program specifying information, receives program identifying information from the first server; an assistance information transmission instruction transmitting unit that transmits an assistance information transmission instruction having the program identifying information received by the program identifying information acquiring unit, to the second server; an assistance information acquiring unit that, in response to transmission of the assistance information transmission instruction, receives assistance information corresponding to the program identifying information contained in the assistance information transmission instruction, from the second server; and an output unit that outputs the program received by the program receiving unit and the assistance information received by the assistance information acquiring unit.

With this configuration, the program output apparatus can output, together with a program that is being received thereby, assistance information associated with the program. A program provider (broadcast station) for providing a program, a program management organization for managing program management information, and an assistance information provider for providing assistance information can form a program system in which it is possible to view a program to which no assistance information is attached, while causing the program output apparatus side to add assistance information to the program. Furthermore, regarding a program to which no assistance information is attached, it is possible to cause the program output apparatus side to output the program and assistance information corresponding to the program, without changing the conventional configuration of the broadcast station side.

Furthermore, a second example is directed to the program output apparatus according to the first aspect, wherein the assistance information transmission instruction has the program identifying information, and point information indicating an assistance information output point in the program identified by the program identifying information, the assistance information in the second storage unit is associated with the point information, and the second processing unit acquires assistance information corresponding to the program identifying information and the point information contained in the assistance information transmission instruction, from the second storage unit.

With this configuration, the program output apparatus can output, together with a program that is being received thereby, multiple pieces of assistance information associated with the program respectively at designated output points in the program.

Furthermore, a third aspect of the present invention is directed to the program output apparatus according to the first aspect, wherein the second transmitting unit transmits the assistance information acquired by the second processing unit and an assistance information identifier for identifying the assistance information, to the program output apparatus, the assistance information transmission instruction transmitting unit transmits an assistance information transmission instruction having the program identifying information received by the program identifying information acquiring unit and the assistance information identifier, to the second server, and the second processing unit acquires a next piece of assistance information following the assistance information identified by the assistance information identifier, the assistance information corresponding to the program identifying information contained in the assistance information transmission instruction.

With this configuration, the program output apparatus can output, together with a program that is being received thereby, multiple pieces of assistance information associated with the program respectively at designated output points in the program.

Furthermore, a fourth aspect of the present invention is directed to the program output apparatus according to any one of the first to third aspects, wherein the first server and the second server are different apparatuses.

With this configuration, the program output apparatus can output, together with a program that is being received thereby, multiple pieces of assistance information associated with the program respectively at designated output points in the program. Furthermore, it is possible to manage the program management information and the assistance information separately.

Furthermore, a fifth example is directed to the program output apparatus according to any one of the first to fourth aspects, wherein the first receiving unit of the first server receives change information, which is information for changing program identifying information contained in program management information, from an external apparatus, and the first processing unit changes program identifying information contained in program specifying information corresponding to the change information.

With this configuration, even if the content of a program that is being received by the program output apparatus is changed, the program output apparatus can output, together with the program after the change, assistance information corresponding to the content of the program after the change.

Furthermore, a sixth example is directed to the program output apparatus according to any one of the first to fifth aspects, wherein the assistance information is one or more types of information selected from the group consisting of captions, sign language video, Emojis, and assistance audio corresponding to the program.

With this configuration, the program output apparatus can output, together with a program that is being received thereby, one or more types of assistance information selected from the group consisting of captions, sign language video, Emojis, assistance audio, and the like associated with the program.

Furthermore, a seventh sample is directed to a program output apparatus including: a program receiving unit that receives a program; a channel identifier acquiring unit that acquires a channel identifier of the program that is being received by the program receiving unit; a program identifying information acquiring unit that acquires program identifying information corresponding to program specifying information containing the channel identifier; an assistance information acquiring unit that acquires assistance information corresponding to the program identifying information acquired by the program identifying information acquiring unit, the assistance information being received from an assistance information management server in which one or more pieces of assistance information corresponding to program identifying information are stored; and an output unit that outputs the program received by the program receiving unit and the assistance information acquired by the assistance information acquiring unit.

With this configuration, the program output apparatus can output, together with a program that is being received thereby, assistance information associated with the program. A program provider (broadcast station) for providing a program, a program management organization for managing program management information, and an assistance information provider for providing assistance information can form a program system in which it is possible to view a program to which no assistance information is attached, while causing the program output apparatus side to add assistance information to the program. Regarding a program to which no assistance information is attached, it is possible to cause the program output apparatus side to output the program and assistance information corresponding to the program, without changing the conventional configuration of the broadcast station side.

Furthermore, an eighth example is directed to a program management server including: a program management information storage unit in which one or at least two pieces of program management information each having program identifying information for identifying a program, a channel identifier of the program, and broadcast timeslot information indicating a timeslot during which the program is broadcasted are stored; a program specifying information receiving unit that receives program specifying information containing a channel identifier of a program, from a program output apparatus; a program identifying information acquiring unit that acquires program identifying information corresponding to the channel identifier contained in the program specifying information and current time, from the program management information storage unit; and a program identifying information transmitting unit that transmits the program identifying information acquired by the program identifying information acquiring unit, to the program output apparatus.

With this configuration, it is possible to provide the program output apparatus with program identifying information of a program that is being received by the program output apparatus.

Furthermore, a ninth example is directed to an assistance information management server including: an assistance information storage unit in which one or more pieces of assistance information associated with program identifying information are stored; an assistance information transmission instruction receiving unit that receives an assistance information transmission instruction having program identifying information, from a program output apparatus; an assistance information acquiring unit that acquires assistance information corresponding to the program identifying information contained in the assistance information transmission instruction, from the assistance information storage unit; and an assistance information transmitting unit that transmits the assistance information acquired by the assistance information acquiring unit, to the program output apparatus.

With this configuration, it is possible to provide the program output apparatus with assistance information for a program that is being received by the program output apparatus.

Furthermore, a tenth example is directed to a method for outputting a program and assistance information from a program output apparatus that is communicably connected to: a program management server in which one or at least two pieces of program management information each having program identifying information for identifying a program and a channel identifier of the program are stored; and an assistance information management server in which one or more pieces of assistance information associated with the program identifying information are stored, the method including: a program receiving step of receiving a program; a channel identifier acquiring step of acquiring a channel identifier of the program that is being received; a program specifying information transmitting step of transmitting program specifying information containing the channel identifier acquired in the channel identifier acquiring step, to the program management server; a program identifying information receiving step of, in response to transmission of the program specifying information, receiving program identifying information from the program management server; an assistance information transmission instruction transmitting step of transmitting an assistance information transmission instruction having the program identifying information received in the program identifying information receiving step, to the assistance information management server; an assistance information receiving step of, in response to transmission of the assistance information transmission instruction, receiving assistance information corresponding to the program identifying information contained in the assistance information transmission instruction, from the assistance information management server; and an output step of outputting the program received in the program receiving step and the assistance information received in the assistance information receiving step.

With this configuration, the program output apparatus can output, together with a program that is being received thereby, assistance information associated with the program. A program provider (broadcast station) for providing a program, a program management organization for managing program management information, and an assistance information provider for providing assistance information can form a program system in which it is possible to view a program to which no assistance information is attached, while causing the program output apparatus side to add assistance information to the program. Regarding a program to which no assistance information is attached, it is possible to cause the program output apparatus side to output the program and assistance information corresponding to the program, without changing the conventional configuration of the broadcast station side.

Furthermore, an eleventh example is directed to a storage medium in which a program is stored, the program causing a computer controlled thereby to execute a program output apparatus that is communicably connected to: a program management server in which one or at least two pieces of program management information each having program identifying information for identifying a program and a channel identifier of the program are stored; and an assistance information management server in which one or more pieces of assistance information associated with the program identifying information are stored, the program causing the computer to function as: a program receiving unit that receives a program; a channel identifier acquiring unit that acquires a channel identifier of the program that is being received; a program specifying information transmitting unit that transmits program specifying information containing the channel identifier acquired by the channel identifier acquiring unit, to the program management server; a program identifying information receiving unit that, in response to transmission of the program specifying information, receives program identifying information from the program management server; an assistance information transmission instruction transmitting unit that transmits an assistance information transmission instruction having the program identifying information received by the program identifying information receiving unit, to the assistance information management server; an assistance information receiving unit that, in response to transmission of the assistance information transmission instruction, receives assistance information corresponding to the program identifying information contained in the assistance information transmission instruction, from the assistance information management server; and an output unit that outputs the program received by the program receiving unit and the assistance information received by the assistance information receiving unit.

With this configuration, the program output apparatus can output, together with a program that is being received thereby, assistance information associated with the program. A program provider (broadcast station) for providing a program, a program management organization for managing program management information, and an assistance information provider for providing assistance information can form a program system in which it is possible to view a program to which no assistance information is attached, while causing the program output apparatus side to add assistance information to the program. Regarding a program to which no assistance information is attached, it is possible to cause the program output apparatus side to output the program and assistance information corresponding to the program, without changing the conventional configuration of the broadcast station side.

### Advantageous Effects of Invention

With the program output apparatus, the program management server, the assistance information management server, the method for outputting a program and assistance information, and the storage medium according to the present invention, the program output apparatus can acquire assistance information associated with a program that is being received thereby, from an assistance information management server or the like, and can output the assistance information together with the program. Furthermore, a program provider (broadcast station) for providing a program, a program management organization for managing program management information, and an assistance information provider for providing assistance information can form a program system in which it is possible to view a program to which no assistance information is attached, while causing the program output apparatus side to add assistance information to the program. Regarding a program to which no assistance information is attached, it is possible to cause the program output apparatus side to output the program and assistance information corresponding to the program, without changing the conventional configuration of the broadcast station side.

### Brief Description of Drawings

FIG. 1 is a block diagram of a program system in Embodiment 1.
FIG. 2 is a block diagram of a program output apparatus constituting a part of the program system in the embodiment.
FIG. 3 is a block diagram of a first server constituting a part of the program system in the embodiment.
FIG. 4 is a block diagram of a second server constituting a part of the program system in the embodiment.
FIG. 5 shows diagrams illustrating output points of assistance information in a program.
FIG. 6 is a flowchart illustrating an operation in which output by the program output apparatus is controlled.
FIG. 7 is a flowchart illustrating an operation in which transmission of program identifying information by the first server is controlled.
FIG. 8 is a flowchart illustrating an operation in which transmission of assistance information by the second server is controlled.
FIG. 9 is a table showing an example of program management information stored in a first storage unit of the first server.
FIG. 10 is a table showing an example of caption information stored in a second storage unit 401 of the second server.
FIG. 11 is a diagram illustrating a specific example of an operation in which output of a program and assistance information by the program output apparatus is controlled.
FIG. 12 is a view showing an example of an output mode that outputs caption information together with a program.
FIG. 13 is a view showing an example of an output mode that outputs sign language information together with a program.
FIG. 14 is a view showing another output mode that outputs caption information together with a program.
FIG. 15 is a schematic view showing an example of an external view of a computer system that realizes the program output apparatus in the embodiment.
FIG. 16 is a block diagram showing an internal configuration of the computer system in the embodiment.

### Description of Embodiment

Hereinafter, an embodiment of a program output apparatus and the like according to the present invention will be described with reference to the drawings.

It should be noted that constituent elements denoted by the same reference numerals in the embodiment perform similar operations, and thus a description thereof may not be repeated. Regarding a storage unit or the like in which a given piece of information is stored, there is no limitation on the procedure in which the information is stored in the storage unit. For example, the information may be stored in the storage unit or the like via a storage medium. Alternatively, the information input via an input device may be stored in the storage unit or the like.

The formats, the content, and the like of each type of information described in the embodiment are merely an example, and there is no limitation on the formats, the content, and the like.

### Embodiment 1

In this embodiment, a program system including a server and a program output apparatus will be described, wherein the server manages program identifying information, program broadcast timeslot information, and one or at least two pieces of assistance information, in association with each other, and the program output apparatus receives a program, acquires the assistance information from the server, and outputs the assistance information together with the program.

The program identifying information is information for identifying a program (content) broadcasted by television broadcasting, IP (internet protocol) broadcasting, or the like. The broadcast timeslot information is information related to the timeslot during which the program is broadcasted. The assistance information is information that is output together with the program and is used to assist a viewer with viewing the program.

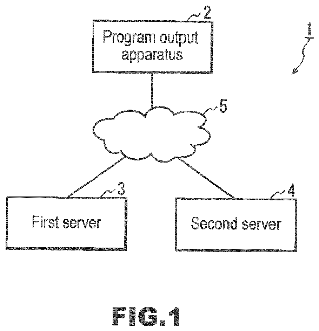

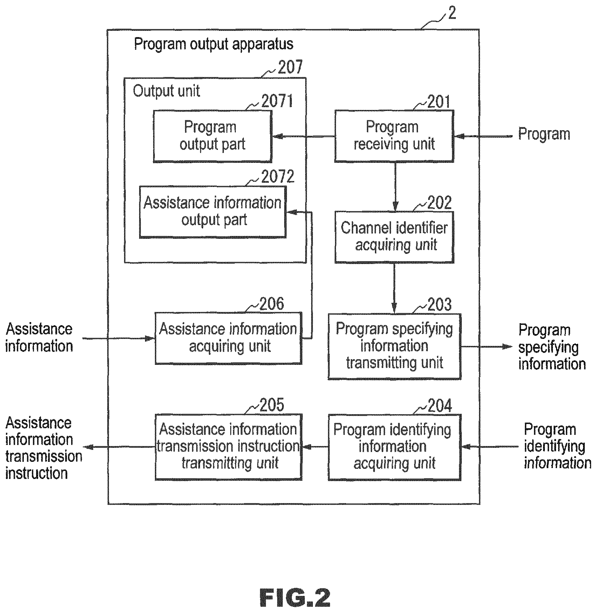

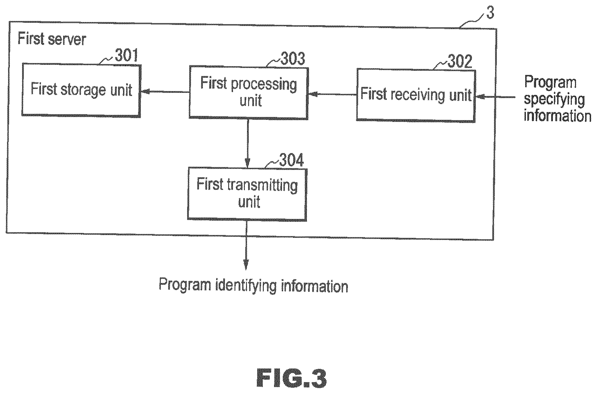

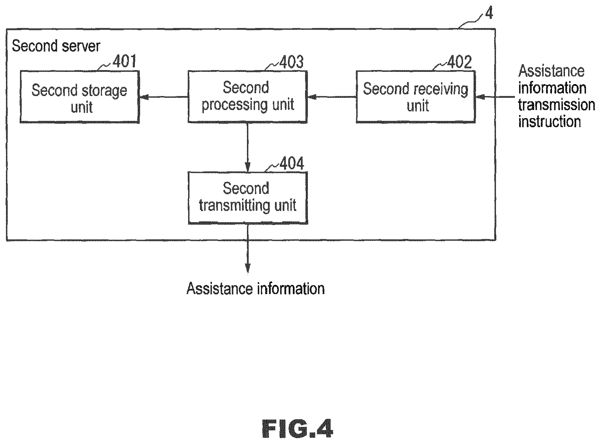

FIG. 1 is a block diagram of a program system 1 in this embodiment. FIG. 2 is a block diagram of a program output apparatus 2 constituting a part of the program system 1. FIG. 3 is a block diagram of a first server 3 constituting a part of the program system 1. FIG. 4 is a block diagram of a second server 4 constituting a part of the program system 1.

The program system 1 includes one or at least two program output apparatuses 2, one or at least two first servers 3, and one or at least two second servers 4. The program output apparatuses 2, the first servers 3, and the second servers 4 are connected to, for example, an internet communication line 5. The first servers 3 and the second servers 4 respectively correspond to the program management server of the eighth example and the assistance information management server of the ninth example. FIG. 1 shows an example in which the program system 1 includes one program output apparatus 2, one first server 3, and one second server 4.

The program output apparatus 2 receives a program broadcasted from an unshown broadcast station, and acquires assistance information associated with the program, from the second server 4. The program output apparatus 2 is an apparatus that can receive a program broadcasted by television broadcasting, IP broadcasting, or the like, and can acquire program identifying information and assistance information from the first server 3 and the second server 4. The program output apparatus 2 is, for example, a digital television, a personal computer, a hard disk recorder, a Blu-ray Disc recorder, or the like.

As shown in FIG. 2, the program output apparatus 2 includes a program receiving unit 201, a channel identifier acquiring unit 202, a program specifying information transmitting unit 203, a program identifying information acquiring unit 204, an assistance information transmission instruction transmitting unit 205, an assistance information acquiring unit 206, and an output unit 207. The output unit 207 includes a program output part 2071 and an assistance information output part 2072.

The program receiving unit 201 receives a program. The program receiving unit 201 may receive a program from a program distribution server via a wired or wireless communication part, or may receive a program wirelessly from a terrestrial broadcast station.

The program receiving unit 201 typically receives a program on a preset channel number when the program output apparatus 2 is on. Typically, if a viewer operates a remote-control unit to set a desired channel number, the channel number is stored in an unshown channel identifier storage unit. The channel number is one type of channel identifier. The program receiving unit 201 adjusts the receiving frequency to a frequency corresponding to the channel number stored in the channel identifier storage unit, thereby receiving a program broadcasted on that channel number.

Each time a viewer operates a remote-control unit to set a channel number, that channel number is stored in the channel identifier storage unit. Accordingly, in the channel identifier storage unit, a channel number (channel identifier) that was set latest by the viewer is stored.

Typically, the program receiving unit 201 receives video information and audio information of a program in units of one frame, and accumulates the received video information and audio information in an unshown program storage unit. The video information and the audio information of the program accumulated in the program storage unit are output by the program output part 2071 of the output unit 207, which will be described later.

The channel identifier acquiring unit 202 acquires a channel identifier of the program that is being received by the program receiving unit 201. The channel identifier is information for identifying a channel on which the program is broadcasted, and is, for example, a channel number or the like. The channel number is a number for identifying a frequency zone allocated as a physical transmission line through which a broadcast station broadcasts a program. For example, the channel number is the channel number "13" or "14" in digital terrestrial broadcasting, or the channel number "BC200" or "BC201" in BS broadcasting.

The channel identifier acquiring unit 202 acquires a channel identifier of the program that is being received by the program receiving unit 201, typically by reading the channel number from the channel identifier storage unit. The channel identifier is not limited to the channel number, and also may be other information, as long as a channel on which a program is transmitted can be identified. For example, if one channel is allocated to a broadcast station, the broadcast station name may be taken as the channel identifier.

The program specifying information transmitting unit 203 transmits program specifying information containing the channel identifier acquired by the channel identifier acquiring unit 202, to the first server 3. The reason why the program specifying information transmitting unit 203 transmits the program specifying information to the first server 3 is to acquire program identifying information of the program that is being received by the program receiving unit 201, from the first server 3. The program identifying information is information for identifying a program. The program identifying information is typically a program identifier provided for each program, but may be, for example, program code such as G-code.

The program specifying information is information for specifying a program that is currently being received by the program output apparatus 2. Since a program that is broadcasted by a broadcast station can be specified by the channel identifier and the broadcast timeslot of the program, and thus the program that is currently being received by the program output apparatus 2 can be specified by, for example, the channel identifier that is being received by the program output apparatus 2 and the current time.

Both of the channel identifier contained in the program specifying information and the current time may be acquired by the program output apparatus 2, or only the channel identifier may be acquired by the program output apparatus 2 with the current time being acquired by the first server 3. If the program output apparatus 2 is to acquire the current time, for example, the program specifying information transmitting unit 203 acquires the current time from an unshown clock, and transmits the current time together with the channel identifier acquired by the channel identifier acquiring unit 202, to the first server 3. There is no limitation on the method, the procedure, and the like for acquiring the current time. If the program output apparatus 2 is to acquire only the channel identifier, the program specifying information transmitting unit 203 transmits the channel identifier acquired by the channel identifier acquiring unit 202, to the first server 3.

The program identifying information acquiring unit 204 acquires the program identifying information of the program that is being received by the program receiving unit 201. In response to transmission of the program specifying information by the program specifying information transmitting unit 203, the first server 3 transmits the program identifying information. The program identifying information acquiring unit 204 receives the program identifying information transmitted from the first server 3.

The assistance information transmission instruction transmitting unit 205 transmits an assistance information transmission instruction having the program identifying information received by the program identifying information acquiring unit 204, to the second server 4. The assistance information transmission instruction is an instruction for the second server 4 to transmit one or at least two pieces of assistance information associated with the program identifying information, to the program output apparatus 2.

The assistance information is information for assisting a viewer with viewing when the viewer is viewing a program output from the program output apparatus 2. Examples of the assistance information include information such as captions, sign languages, Emojis, and assistance audio, but are not limited to these types of information.

The caption information is information displayed in accordance with video of the program, the information expressing conversation, commentary, onomatopoeic words, or the like, with text characters or symbols. Captions are typically configured by still images in which text characters or symbols are displayed in the background. Captions are output so as to be superimposed on a scene of program video associated therewith. Sign language information is information of video (moving images) expressing conversation, commentary, onomatopoeic words, or the like, with sign language. Emoji information is information symbolically expressing the content of conversation or commentary using Emojis. Emojis are configured by, for example, image data (bitmap data) of pictures or symbols created in advance, or code data obtained by registering Emojis as codes.

The assistance audio information is information for giving audio commentary, to commentary or the like displayed on or added to video of the program. The assistance audio is, for example, audio obtained by getting a person to read out commentary writing, audio obtained by converting commentary writing by speech synthesis, or the like. The assistance information audio is, for example, digital audio data.

Typically, one or at least two pieces of assistance information are associated with one program. If two or more pieces of assistance information are associated with one program, each piece of assistance information may be associated according to an output point in the program. If the assistance information is association with a specific scene, the output point in the program is, for example, a temporal position at which that scene appears in the program.

If multiple pieces of assistance information are associated with the program that is being received by the program receiving unit 201, the assistance information transmission instruction transmitting unit 205 may transmit an assistance information transmission instruction for instructing collective transmission of these pieces of assistance information, to the second server 4, or may transmit an assistance information transmission instruction for instructing sequential transmission of these pieces of assistance information, to the second server 4.

In the case of instructing sequential transmission of multiple pieces of assistance information, the assistance information transmission instruction transmitting unit 205 transmits, as a transmission instruction of a first piece of assistance information, an assistance information transmission instruction having the program identifying information, to the second server 4. Then, the assistance information transmission instruction transmitting unit 205 transmits, as transmission instructions of second and subsequent pieces of assistance information, assistance information transmission instructions each having the program identifying information received by the program identifying information acquiring unit 204 and an assistance information identifier contained in the acquired assistance information, to the second server 4.

In response to transmission of the assistance information transmission instruction by the assistance information transmission instruction transmitting unit 205, the second server 4 transmits the assistance information corresponding to the program identifying information. The assistance information acquiring unit 206 receives the assistance information corresponding to the program identifying information, transmitted from the second server 4. The assistance information acquiring unit 206 stores the acquired assistance information in an unshown assistance information storage unit. The assistance information storage unit is configured by, for example, a buffer memory.

The output unit 207 outputs the program received by the program receiving unit 201 and the assistance information received by the assistance information acquiring unit 206. The program is output by the program output part 2071, and the assistance information is output by the assistance information output part 2072.

The program output part 2071 outputs the video information and the audio information stored in the program storage unit. The video information is output typically by image output on a display screen provided on the program output apparatus 2, and the audio information is output typically by audio output from a speaker provided in the program output apparatus 2. The program output part 2071 outputs the video information of the program to the display screen, and outputs the audio information of the program to the speaker.

The assistance information output part 2072 outputs the assistance information stored in the assistance information storage unit. The output of the assistance information by the assistance information output part 2072 is a concept that encompasses, for example, output by a speaker (sound output), output by a display screen (image display), projection using a projector, printing by a printer, transmission to another apparatus, accumulation in a storage medium, delivery of a processing result to another processing apparatus or another program, and the like. It is assumed that the transmission, the accumulation, and the processing result delivery are such that the output target is ultimately presented to the user. Such another apparatus is, for example, an apparatus that can output images or audio, such as an earphone, a headphone, a mobile phone, a smartphone, or the like.

If the assistance information is image information such as captions or sign language video, the assistance information output part 2072 typically outputs the assistance information together with the video information of the program, to the display screen of the program output apparatus 2, or to a display screen of another apparatus (e.g., a mobile terminal) that is different from the program output apparatus 2. If the assistance information is audio information such as assistance audio, the assistance information output part 2072 typically outputs the audio information from the speaker of the program output apparatus 2, or a speaker of another apparatus (e.g., a mobile terminal) that is different from the program output apparatus 2.

In the case of outputting the assistance information to the program output apparatus 2, the assistance information output part 2072 outputs the assistance information, for example, in a mode in which the assistance information is output so as to be superimposed on video of the program on the same screen of the display, in a mode in which the assistance information is output to one of the screens obtained by dividing the display, or the like.

The output unit 207 may be considered to include or to not include an output device such as a display screen or a speaker. The output unit 207 may be realized by driver software for an output device, a combination of driver software for an output device and the output device, or the like.

The program receiving unit 201, the program specifying information transmitting unit 203, and the assistance information transmission instruction transmitting unit 205 are realized typically by wireless or wired communication parts. The channel identifier acquiring unit 202, the program identifying information acquiring unit 204, and the assistance information acquiring unit 206 may be realized typically by MPUs, memories, or the like. Typically, the processing procedure of the channel identifier acquiring unit 202, the program identifying information acquiring unit 204, and the assistance information acquiring unit 206 is realized by software, and the software is stored in a storage medium such as a ROM. Note that the processing procedure may also be realized also by hardware (a dedicated circuit).

The first server 3 manages program management information of a program. Upon receiving the program specifying information from the program output apparatus 2, the first server 3 transmits program identifying information corresponding to the program specifying information, to the program output apparatus 2.

As shown in FIG. 3, the first server 3 includes a first storage unit 301, a first receiving unit 302, a first processing unit 303, and a first transmitting unit 304.

In the first storage unit 301, one or at least two pieces of program management information each having program identifying information for identifying a program, a channel identifier of the program, and broadcast timeslot information indicating the broadcast timeslot of the program are stored. The broadcast timeslot information is, for example, information containing broadcast date (year/month/date), broadcast start time (hour/minute/second), and broadcast end time (hour/minute/second). The program management information has program identifying information, a channel identifier, and broadcast timeslot information. The program management information may have program-related information related to a program, such as a program name (title), a plotline of the program, a summary of the program, commentary on the program, people starring in the program, comments on the program, or the like.

The program management information stored in the first storage unit 301 can be modified or changed. The program management information stored in the first storage unit 301 is modified or changed, for example, in the case where the content of the program or the broadcast timeslot has to be changed due to a change in the content of the program, an extension of the broadcast time of the program, replacement of ordinary program broadcasting by emergency broadcasting upon occurrence of an earthquake, or the like. The program management information is modified or changed, for example, by a program providing organization.

The first storage unit 301 is preferably a non-volatile storage medium, but may also be realized also by a volatile storage medium. There is no limitation on the procedure in which the program management information is stored in the first storage unit 301. For example, the program management information may be stored in the first storage unit 301 via a storage medium. Alternatively, the program management information transmitted via a communication line or the like may be stored in the first storage unit 301. Alternatively, the program management information input via an input device may be stored in the first storage unit 301.

The first receiving unit 302 receives program specifying information containing a channel identifier of a program, from the program output apparatus 2. The program specifying information is the program specifying information transmitted by the program specifying information transmitting unit 203 of the program output apparatus 2 described above. The first receiving unit 302 receives change information, which is information for changing program identifying information contained in program management information, from an external apparatus. Such an external apparatus is, for example, a terminal apparatus or the like provided in a program providing organization.

The first processing unit 303 acquires program identifying information corresponding to the channel identifier contained in the program specifying information received by the first receiving unit 302 and the current time, from the first storage unit 301. As described above, if the program specifying information transmitted from the program output apparatus 2 has the current time, "current time" is the current time contained in the program specifying information. If the program specifying information has no current time, "current time" is the current time acquired by the first processing unit 303 from an unshown clock. The current time acquired by the first processing unit 303 is the time corresponding to the time at which the first receiving unit 302 received the program specifying information.

The first processing unit 303 performs a process that changes the program identifying information corresponding to the change information received by the first receiving unit 302, on the program identifying information stored in the first storage unit 301.

The first transmitting unit 304 transmits the program identifying information acquired by the first processing unit 303, to the program output apparatus 2.

The first receiving unit 302 and the first transmitting unit 304 are realized typically by wireless or wired communication parts. The first processing unit 303 may be realized typically by an MPU, a memory, or the like. Typically, the processing procedure of the first processing unit 303 is realized by software, and the software is stored in a storage medium such as a ROM. Note that the processing procedure may also be realized also by hardware (a dedicated circuit).

The second server 4 manages assistance information that is provided to the program output apparatus 2. Upon receiving the program identifying information from the program output apparatus 2, the second server 4 transmits assistance information corresponding to the program identifying information, to the program output apparatus 2. The second server 4 may be configured so as to manage multiple types of assistance information (e.g., assistance information such as caption information, sign language information, and Emoji information), or may be configured so as to manage one type of assistance information (e.g., caption information). If the second server 4 is configured so as to manage one type of manages assistance information, the program system 1 may include multiple second servers 4 that respectively manage different types of assistance information. For example, the program system 1 may include a second server 4 that manages caption information and a second server 4 that manages sign language information.

The second server 4 includes a second storage unit 401, a second receiving unit 402, a second processing unit 403, and a second transmitting unit 404. In the second storage unit 401, one or at least two pieces of assistance information associated with program identifying information are stored. The assistance information stored in the second storage unit 401 is assistance information such as caption information, sign language information, Emoji information, assistance audio information, or the like described above. The one or at least two pieces of assistance information stored in the second storage unit 401 are provided with assistance information identifiers for respectively identifying the pieces of assistance information.

In the second storage unit 401, assistance information associated also with point information indicating an output point in a program may be stored. The point information of the assistance information is information indicating the above-described assistance information output point (temporal output position in the program). The point information of the assistance information may be any type of information, as long as it is information indicating the temporal output position of the assistance information from the output start time of the program.

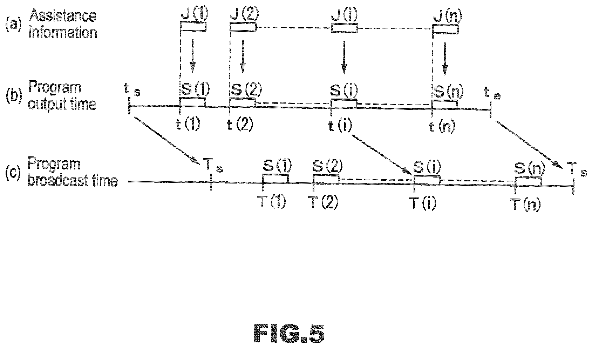

For example, as shown in FIGS. 5(a) and 5(b), n pieces of assistance information J(i) (i is a number for identifying assistance information associated with a scene: i = 1, 2, ..., and n) are respectively associated with n pieces of scene S(i) (i is a number for identifying a scene: i = 1, 2, ..., and n) in one program, an output point of an i^{-th} piece of assistance information J(i) in the program can be defined, for example, by an appearance time t(i) of the scene S(i).

The information indicating the appearance time t(i) may be information of a relative output time in the program measured based on the output start time tₛ of the program, or may be information of an output time T(i) of the assistance information (absolute output time) in a broadcast timeslot in the case where broadcasting of the program is started at a time Tₛ of a broadcast date as shown in FIG. 5(c). The information of the assistance information output point may be a frame number corresponding to the appearance time t(i) among the frames constituting video of the program. The information of the assistance information output point may be an offset indicating the appearance time t(i) of the scene S(i).

The second storage unit 401 is preferably a non-volatile storage medium, but may also be realized also by a volatile storage medium. There is no limitation on the procedure in which the assistance information is stored in the second storage unit 401. For example, the assistance information may be stored in the second storage unit 401 via a storage medium. Alternatively, the assistance information transmitted via a communication line or the like may be stored in the second storage unit 401. Alternatively, the assistance information input via an input device may be stored in the second storage unit 401.

The second receiving unit 402 receives an assistance information transmission instruction having program identifying information, from the program output apparatus 2. The assistance information transmission instruction has program identifying information, but may have point information indicating an assistance information output point in the program identified by the program identifying information.

The second processing unit 403 acquires assistance information corresponding to the program identifying information contained in the assistance information transmission instruction, from the second storage unit 401. If the second receiving unit 402 receives an assistance information transmission instruction, and the assistance information transmission instruction has program identifying information, the second processing unit 403 acquires program identifying information from the assistance information transmission instruction. The second processing unit 403 acquires assistance information corresponding to the program identifying information, from the second storage unit 401.

If the assistance information transmission instruction has an assistance information identifier, the second processing unit 403 acquires the assistance information identifier from the assistance information transmission instruction. The second processing unit 403 acquires a next piece of assistance information following the assistance information identified by the assistance information identifier, from the second storage unit 401. The next piece of assistance information is assistance information whose output point in the program is located temporally next to the identified assistance information. Accordingly, if multiple pieces of assistance information associated with the program identifying information are stored in the second storage unit 401, the second processing unit 403 acquires multiple pieces of assistance information corresponding to the program identifying information, in order of output points in the program. The second processing unit 403 may collectively acquire multiple pieces of assistance information associated with the program identifying information.

The second transmitting unit 404 transmits the program identifying information acquired by the second processing unit 403, to the program output apparatus 2.

The second receiving unit 402 and the second transmitting unit 404 are realized typically by wireless or wired communication parts. The second processing unit 403 may be realized typically by an MPU, a memory, or the like. Typically, the processing procedure of the second processing unit 403 is realized by software, and the software is stored in a storage medium such as a ROM. Note that the processing procedure may also be realized also by hardware (a dedicated circuit).

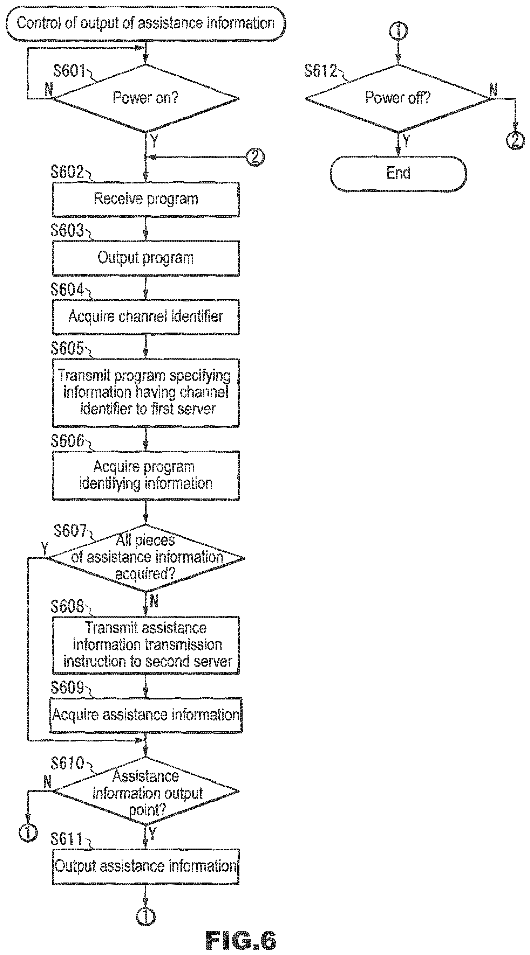

Next, operations of the program system 1 will be described with reference to the flowcharts in FIGS. 6 to 8. The program system 1 according to the present invention is characterized by an operation in which the program output apparatus 2 mutually communicates with the first server 3 and the second server 4, thereby acquiring assistance information associated with the program that is being received by the program output apparatus 2, and outputting the assistance information together with the program that is being received. Hereinafter, operations of the program output apparatus 2, the first server 3, and the second server 4 will be described.

First, an operation in which output by the program output apparatus 2 is controlled will be described with reference to the flowchart in FIG. 6.

(Step S601) The program receiving unit 201 judges whether or not the power is turned on. If the power is turned on (S601: Y), the procedure advances to step S602, and, if the power is off, (S601: N), the procedure returns to step S601.

(Step S602) The program receiving unit 201 receives a program transmitted with a channel identifier stored in the channel identifier storage unit. The program receiving unit 201 receives video information and audio information of the program in units of one frame, and sequentially stores these pieces of information in the program storage unit.

(Step S603) The program output part 2071 of the output unit 207 reads and outputs the audio information and the video information of the program stored in the program storage unit in order of being stored.

(Step S604) The channel identifier acquiring unit 202 acquires the channel identifier from the channel identifier storage unit.

(Step S605) The program specifying information transmitting unit 203 transmits program specifying information containing the channel identifier acquired by the channel identifier acquiring unit 202, to the first server 3.

(Step S606) If program identifying information corresponding to the channel identifier contained in the program specifying information is transmitted from the first server 3 in response to transmission of the program specifying information by the program specifying information transmitting unit 203, the program identifying information acquiring unit 204 receives the program identifying information.

(Step S607) The assistance information transmission instruction transmitting unit 205 determines whether or not all pieces of assistance information that are for the program that is being output by the output unit 207, and that are to be output together with the program have been acquired from the second server 4. If the assistance information transmission instruction transmitting unit 205 determines that all pieces of assistance information have not been acquired (S607: N), the procedure advances to step S608, and, if it is determined that all pieces of assistance information have been acquired (S607: Y), the procedure advances to step S610.

(Step S608) The assistance information transmission instruction transmitting unit 205 transmits an assistance information transmission instruction containing the program identifying information acquired by the program identifying information acquiring unit 204, to the second server 4. If the assistance information has not been received yet from the second server 4, the assistance information transmission instruction transmitting unit 205 transmits the program identifying information to the second server 4, whereas, if the assistance information has been already received, the assistance information transmission instruction transmitting unit 205 transmits an assistance information identifier contained in the latest piece of assistance information that has been received, together with the program identifying information, to the second server 4.

(Step S609) If assistance information is transmitted from the second server 4 in response to transmission of the assistance information transmission instruction by the assistance information transmission instruction transmitting unit 205, the assistance information acquiring unit 206 acquires the assistance information, as assistance information associated with the program that is currently being received by the program receiving unit 201, and stores the information in a buffer memory.

If the assistance information transmission instruction transmitting unit 205 transmits an assistance information transmission instruction for the first time to the second server 4, the second server 4 transmits assistance information having an assistance information identifier corresponding to the program identifying information contained in the assistance information transmission instruction and the current time (time corresponding to the time at which the assistance information transmission instruction was received), to the program output apparatus 2. Accordingly, the assistance information acquiring unit 206 acquires the assistance information corresponding to the time at which the program receiving unit 201 started to receive the program. The assistance information is assistance information corresponding to an assistance information output point that appears first after the output unit 207 starts to output the program.

On the other hand, if the assistance information transmission instruction transmitting unit 205 outputs second and subsequent assistance information transmission instructions to the second server 4, the second server 4 transmits assistance information having the program identifying information contained in the assistance information transmission instruction and a next assistance information identifier following the assistance information identifier contained in the assistance information transmission instruction, to the program output apparatus 2. Accordingly, the assistance information acquiring unit 206 acquires the assistance information that is located temporally next to the latest piece of assistance information that has been already acquired.

(Step S610) The assistance information output part 2072 judges whether or not any output point (relative output time in the program) contained in the one or at least two pieces of assistance information stored in the buffer memory matches the output point in the program that is being output by the output unit 207. If the assistance information output part 2072 judges that an output point contained in any piece of assistance information matches the output point in the program that is currently being output (S610: Y), the procedure advances to step S611, and, if it is judged that none of the assistance information matches the output point in the program that is currently being output (S610: N), the procedure advances to step S612.

(Step S611) The assistance information output part 2072 reads the assistance information having the output point in the program that is currently being output, from the buffer memory, and outputs the assistance information.

(Step S612) The program receiving unit 201 judges whether or not the power is turned off. If the power is not turned off (S612: N), the procedure returns to step S602, and, if the power source is turned off (S612: Y), the control for output of the assistance information is ended.

In steps S605 and S606 of the flowchart in FIG. 6, the program specifying information transmitting unit 203 may acquire the current time, transmit program specifying information containing the current time and the channel identifier acquired by the channel identifier acquiring unit 202, to the first server 3, and acquire program identifying information corresponding to the channel identifier and the current time, from the first server 3.

Note that the procedure is terminated by powering off or an interruption at the end of the process in the flowchart in FIG. 6.

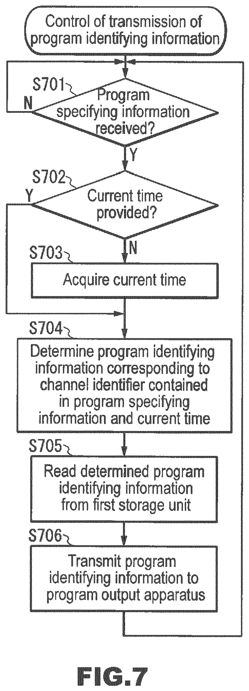

Next, an operation in which transmission of program identifying information by the first server 3 is controlled will be described with reference to the flowchart in FIG. 7.

(Step S701) The first receiving unit 302 is monitoring whether or not program specifying information containing a channel identifier is received from the program output apparatus 2 (loop processing in step S701), and, if the first receiving unit 302 receives program specifying information from the program output apparatus 2 (step S701: Y), the procedure advances to step S702.

(Step S702) The first processing unit 303 determines whether or not the program specifying information received by the first receiving unit 302 contains the current time. If the program specifying information does not contain the current time (S702: N), the procedure advances to step S703, and, if the program specifying information contains the current time (S702: Y), the procedure advances to step S704.

(Step S703) The first processing unit 303 acquires information of the current time (corresponding to the time at which the first receiving unit 302 received the channel identifier) from a clock built in the first server 3.

(Step S704) The first processing unit 303 determines program identifying information corresponding to the channel identifier contained in the program specifying information and the current time, among the pieces of program identifying information stored in the first storage unit 301. If the program specifying information received by the first receiving unit 302 contains the channel identifier and the current time, the first processing unit 303 determines program identifying information corresponding to the channel identifier and the current time. If the program specifying information received by the first receiving unit 302 contains only the channel identifier, the first processing unit 303 determines program identifying information corresponding to the channel identifier, and the current time acquired by the first processing unit 303.

(Step S705) The first processing unit 303 reads the determined program identifying information from the first storage unit 301, thereby acquiring program identifying information that is to be transmitted to the program output apparatus 2.

(Step S706) The first transmitting unit 304 transmits the program identifying information acquired by the first processing unit 303, to the program output apparatus 2, and the procedure returns to step S701.

Note that the procedure is terminated by powering off or an interruption at the end of the process in the flowchart in FIG. 7.

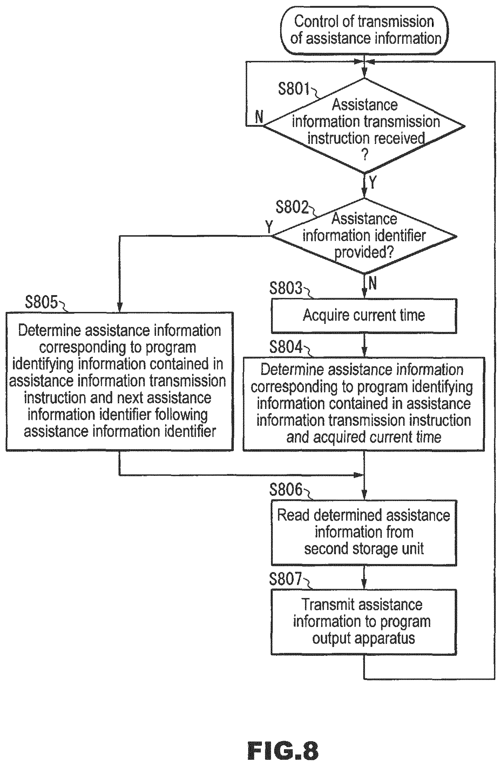

Next, an operation in which transmission of assistance information by the second server 4 is controlled will be described with reference to the flowchart in FIG. 8.

(Step S801) The second receiving unit 402 is monitoring whether or not an assistance information transmission instruction having program identifying information or an assistance information transmission instruction having program identifying information and an assistance information identifier is received from the program output apparatus 2 (loop processing in step S801). If the second receiving unit 402 receives an assistance information transmission instruction from the program output apparatus 2 (step S801: Y), the procedure advances to step S802.

(Step S802) The second processing unit 403 determines whether or not the assistance information transmission instruction received by the second receiving unit 402 contains an assistance information identifier. If the second processing unit 403 determines that the assistance information transmission instruction received by the second receiving unit 402 does not contain an assistance information identifier (S802: N), the procedure advances to step S803, and, if it is determined that the assistance information transmission instruction contains an assistance information identifier (S802: Y), the procedure advances to step S805.

(Step S803) The second processing unit 403 acquires information of the current time (time corresponding to the time at which the second receiving unit 402 received the assistance information request) from a clock built in the second server 4.

(Step S804) The second processing unit 403 determines assistance information corresponding to the program identifying information contained in the assistance information transmission instruction received by the second receiving unit 402 and the current time acquired by the second processing unit 403, among the pieces of program identifying information stored in the second storage unit 401.

(Step S805) The second processing unit 403 determines assistance information corresponding to the program identifying information contained in the assistance information transmission instruction received by the second receiving unit 402 and a next assistance information identifier following the assistance information identifier contained in the assistance information transmission instruction, among the pieces of program identifying information stored in the second storage unit 401.

(Step S806) The second processing unit 403 reads the determined assistance information (information containing the assistance information identifier, the program identifying information, and the point information) from the second storage unit 401, thereby acquiring assistance information that is to be transmitted to the program output apparatus 2.

(Step S807) The second transmitting unit 404 transmits the assistance information acquired by the second processing unit 403, to the program output apparatus 2, and the procedure returns to step S801.

In the flowchart in FIG. 8, if the assistance information transmission instruction received in step S801 contains the current time, the processing in step S803 may not be performed, and, in step S804, the second processing unit 403 may determine assistance information corresponding to the program identifying information and the current time contained in the assistance information transmission instruction received by the second receiving unit 402, among the pieces of assistance information stored in the second storage unit 401.

Note that the procedure is terminated by powering off or an interruption at the end of the process in the flowchart in FIG. 8.

### Specific Example

Next, a specific example of an operation that outputs the program and the assistance information by the program output apparatus 2 will be described.

Below, a case in which the program output apparatus 2 receives a program broadcasted according to a program guide, and the second server 4 provides caption information as the assistance information will be described.

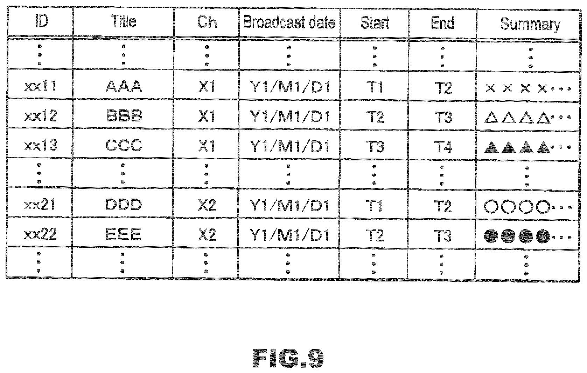

It is assumed that, in the first storage unit 301 of the first server 3, for example, program management information of one or more programs is stored in the list form shown in FIG. 9.

In FIG. 9, the field "ID" is a field indicating program identifying information of a program, the field "Title" is a field indicating a program name, and the field "Ch" is a field indicating an identifier of a channel on which the program is broadcasted. The fields "Broadcast date", "Start", and "End" are fields respectively indicating a broadcast date (year/month/date) on which the program is broadcasted, the broadcast start time (hour/minute/second), and the broadcast end time (hour/minute/second), and the field "Summary" is a field indicating a summary of the content of the program.

The example in FIG. 9 shows that, for example, a program with the program name "AAA" has the program identifier "xxll" and is broadcasted on a channel with the channel number (channel identifier) "X1", wherein the broadcasting is started at the time "T1" on Y1/M1/D1 (year/month/date) and is ended at the time "T2". Furthermore, it is shown that a program with the program name "BBB" has the program identifier "xx12" and is broadcasted on a channel with the channel number "X1", wherein the broadcasting is started at the time "T2" on Y1/M1/D1 (year/month/date) and is ended at the time "T3". The broadcast end time of the program "AAA" is the same as the broadcast start time of the program "BBB", because the program "BBB" is broadcasted following the program "AAA".

The program management information stored in the first storage unit 301 may be modified, for example, by a program providing organization or the like due to replacement of the program that is being broadcasted by earthquake emergency broadcasting upon occurrence of an earthquake or the like, an extension of broadcasting of the program that is being broadcasted, or the like. For example, if the broadcast end time T2 of the program "AAA" is extended by 30 minutes, the one or at least two pieces of program management information stored in the first storage unit 301 are modified such that the broadcast end time T2 of the program "AAA", and the broadcast start times T2, T3, ... and the broadcast end times T3, T4, ... of the programs "BBB", "CCC", ..., which will be sequentially broadcasted following the program "AAA", are each shifted backward by 30 minutes.

If emergency broadcasting "FFF" is broadcasted for 30 minutes from a time "Tₖ" (T1 < Tₖ < T2) during broadcasting of the program "AAA", the one or more pieces of program management information stored in the first storage unit 301 are modified such that program management information (ID: xxNN, title: Earthquake Early Warnings, Ch: X1, broadcast date: Y1/M1/D1, broadcast start time: Tₖ, broadcast end time: (Tₖ + 30 min)) of the emergency broadcasting "FFF" is added between the program "AAA" and the program "BBB".

If the program management information of the emergency broadcasting "FFF" is added, the program management information of the program "AAA" is modified such that the broadcast timeslot is divided into a timeslot from the broadcast start time T1 to the broadcast end time Tₖ and a timeslot from the broadcast start time (Tₖ + 30 min) to the broadcast end time (T2 + 30 min), and the broadcast start times T2, T3, ... and the broadcast end times T3, T4, ... of the programs "BBB", "CCC", ..., which will be sequentially broadcasted following the program "AAA", are each shifted backward by 30 minutes.

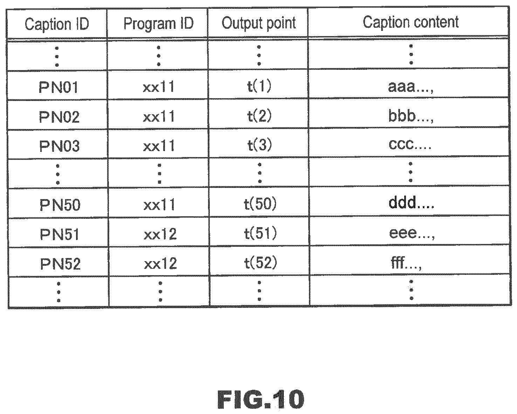

It is assumed that, in the second storage unit 401 of the second server 4, for example, one or more pieces of caption information are stored in the list form shown in FIG. 10.

In FIG. 10, the field "Caption ID" is a field indicating an assistance information identifier, and "Program ID" is a field indicating program identifying information of a program associated with the caption information. The field "Output point" is a field indicating an output point of the caption information in the associated program, and the field "Caption content" is a field indicating the content of a caption that is to be output.

In the example in FIG. 10, as the information of "Output point", information of a relative output time (time corresponding to an output time t(i) in FIG. 5) in the program is shown. In the case of a short sentence, "Caption content" is one whole sentence, but, in the case of a long sentence, "Caption content" is multiple sentence portions obtained by dividing one sentence. Examples thereof include sentences such as "Today is going to be sunny.", and "Today will be sunny in the morning," and "becoming rainy in the afternoon."

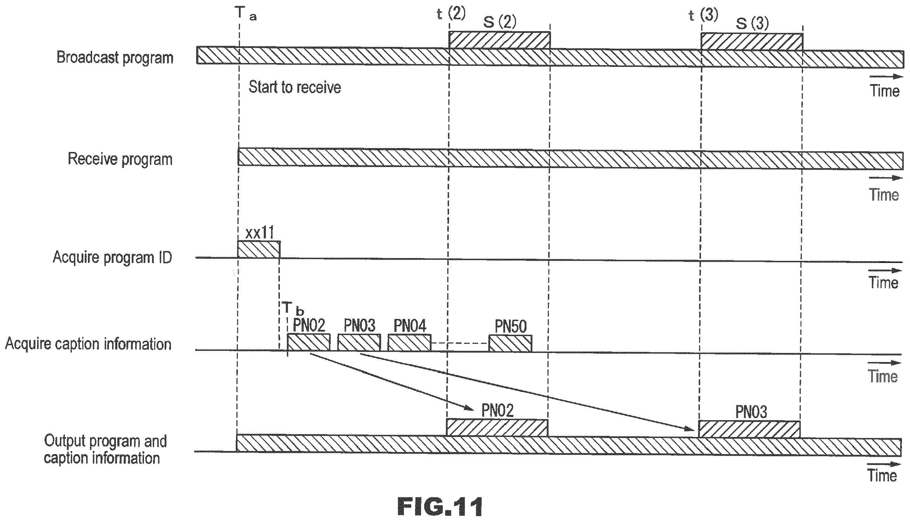

Below, an example of a case in which the program output apparatus 2 receives the program with the program name "AAA" in FIG. 9 after the start of broadcasting will be described with reference to a time chart shown in FIG. 11.

FIG. 11 is a diagram showing an example of a time chart of each process by the program output apparatus 2, that is, receiving a program, acquiring a program ID, acquiring caption information, and outputting the program and the caption information, in the case where the program output apparatus 2 starts to receive the program with the program name "AAA" at a time Tₐ (T1 < Tₐ < T2) in a timeslot (timeslot from the broadcast start time T1 to the broadcasting end time T2) during which the program with the program name "AAA" is broadcasted.

In FIG. 11, "Broadcast program" indicates a state in which video information and audio information of the program with the program name "AAA" are transmitted in streaming. "Receive program" indicates a state in which receiving of the video information and the audio information of the program with the program name "AAA" transmitted from the program output apparatus 2 in streaming is started at a time Tₐ. Scenes S(2) and S(3) shown in the field "Broadcast program" indicate scenes in which captions are displayed. Times t(2) and t(3) indicate times at which the scenes S(2) and S(3) respectively appear.

"Acquire program ID" indicates a time to perform the process that acquires a program ID "xxll" (see FIG. 9) of the program that has the program name "AAA" and that is being received by the program output apparatus 2. "Acquire caption information" indicates a time to perform the process that acquires caption IDs "PN02", "PN03", "PN04", ..., and "PN50" (see FIG. 10) associated with the program ID "xx11". "Output program and caption information" indicates a time to perform the process in which the output unit 207 of the program output apparatus 2 outputs the program and the caption information.

First, when a viewer turns on the program output apparatus 2 at a time Tₐ in a broadcast timeslot (timeslot from T1 to T2) during which the program with the program name "AAA" is broadcasted, the program receiving unit 201 starts to receive a program broadcasted on the channel number (channel identifier) stored in the channel identifier storage unit. The program receiving unit 201 continues to receive the program until the program output apparatus 2 is turned off.

For example, if the channel number "X2" is stored in the channel identifier storage unit, the program receiving unit 201 starts to receive a program with the program name "DDD" broadcasted on the channel number "X2" in the broadcast timeslot from "T1" to "T2". On the other hand, if the viewer operates a remote-control unit to input the channel number "X1", the channel number in the channel identifier storage unit is changed to "X1" and the program receiving unit 201 starts to receive the program with the program name "AAA" broadcasted with the channel identifier "X1" in the broadcast timeslot from "T1" to "T2".

In this specific example, it is assumed that the channel identifier "X1" is stored in the channel identifier storage unit and the program receiving unit 201 starts to receive the program with the program name "AAA" at the time Tₐ.

The program receiving unit 201 receives the video information and audio information of the program with the program name "AAA" in units of one frame, and sequentially stores these pieces of information in the program storage unit. The program output part 2071 of the output unit 207 reads the video information and the audio information of the program stored in the program storage unit in units of frames in order of being stored, and outputs the video information to a display screen and the audio information to a speaker.

The channel identifier acquiring unit 202 acquires the channel number "X1" of the program that has the program name "AAA" and that is being received by the program receiving unit 201, from the channel identifier storage unit, and the program specifying information transmitting unit 203 transmits program specifying information containing the channel number "X1", to the first server 3. The program specifying information transmitting unit 203 may acquire the current time and transmit program specifying information containing the channel number "X1" received by the program receiving unit 201 and the acquired current time, to the first server 3.

In the first server 3, if the first receiving unit 302 receives the program specifying information from the program specifying information transmitting unit 203, the first processing unit 303 determines whether or not the program specifying information contains the current time. If the program specifying information received by the first receiving unit 302 does not contain the current time, the first processing unit 303 acquires a current time Tₐ' (corresponding to the time at which the program specifying information was received) from a clock in the first server 3. The time at which the program specifying information transmitting unit 203 of the program output apparatus 2 transmitted the channel number "X1" is immediately after the time Tₐ at which the program receiving unit 201 of the program output apparatus 2 started to receive the program with the program name "AAA", and thus the current time Tₐ' acquired by the first processing unit 303 can be taken as the time Tₐ at which receiving of the program with the program name "AAA" was started.

The first processing unit 303 searches the program management information stored in the first storage unit 301, and, if the received program specifying information contains the current time, the first processing unit 303 acquires a program ID of a program having the received channel number "X1" and the broadcast timeslot containing the current time Tₐ. If the received program specifying information does not contain the current time, the first processing unit 303 acquires a program ID of a program having the received channel number "X1" and the broadcast timeslot containing the acquired current time Tₐ'.

According to the program management information shown in FIG. 9, the program management information with the program name "AAA" satisfies Ch = X1, T1 < Tₐ < T2 or T1 < Tₐ' < T2, and thus the first processing unit 303 acquires the program ID "xxll" of the program name "AAA". If the first processing unit 303 acquires the program ID "xxll", the first transmitting unit 304 transmits the program ID "xxll" to the program output apparatus 2.

If the program ID "xx11" is transmitted from the first server 3, the program identifying information acquiring unit 204 of the program output apparatus 2 acquires the program ID "xxll", as the program ID of the program that has the program name "AAA" and that is being received by the program receiving unit 201. The assistance information transmission instruction transmitting unit 205 judges whether or not caption information corresponding to the acquired program ID "xxll" has been acquired from the second server 4. If caption information corresponding to the program ID "xxll" has not been acquired, the assistance information transmission instruction transmitting unit 205 transmits an assistance information transmission instruction together with the program ID "xxll" at a time T_{b} (Tₐ < T_{b} < T2) to the second server 4.

That is to say, in the example in FIG. 11, in the case of acquiring caption information having the caption ID "PN02" from the second server 4, the program output apparatus 2 specifies the caption information having the caption ID "PN02", using the program ID "xxll" and the current time information, and acquires the caption information from the second server 4. Since the difference between the time Tₐ and the time T_{b} is very small, in this specific example, the second server 4 acquires the current time T_{b}, and specifies the caption information having the caption ID "PN02", using the program ID "xxll" and the time T_{b}.

If the caption information corresponding to the acquired program ID "xxll" has been acquired from the second server 4, the assistance information transmission instruction transmitting unit 205 transmits an assistance information transmission instruction together with the caption ID and the program ID "xxll" contained in the caption information, to the second server 4.

That is to say, in the example in FIG. 11, in the case of acquiring caption information having the caption ID "PN03" and subsequent caption IDs from the second server 4, the assistance information transmission instruction transmitting unit 205 transmits the program ID "xxll" and the latest caption ID that has been already acquired, to the second server 4, and the assistance information acquiring unit 206 acquires caption information having a next caption ID following the transmitted caption ID and the program ID "xxll" from the second server 4. For example, if the latest caption ID is "PN02", the program output apparatus 2 transmits the program ID "xx11" and the caption ID "PN02" to the second server 4, and acquires caption information having the next caption ID "PN03" following the caption ID "PN02" and the program ID "xx11", from the second server 4.

In the second server 4, if the second receiving unit 402 receives the assistance information transmission instruction from the assistance information transmission instruction transmitting unit 205, the second processing unit 403 judges whether or not the assistance information transmission instruction contains a caption ID. If no caption ID is contained, the second processing unit 403 acquires current time T_{b}' (corresponding to the time at which the assistance information transmission instruction was received) from a clock in the second server 4. The second processing unit 403 searches the caption information stored in the second storage unit 401, and acquires caption information having the program ID "xxll" contained in the received assistance information transmission instruction and an output point corresponding to the acquired current time T_{b}'.

In the example in FIG. 11, since a caption that is output first after the current time T_{b}' is a caption having the appearance time t(2) in the scene S(2), the second processing unit 403 acquires caption information having the program ID "xxll" and an output point corresponding to the appearance time t(2). The second processing unit 403 transforms the current time T_{b}' (absolute time) into a relative time "t(2)" in the broadcast time of the program with the program name "AAA". The second processing unit 403 acquires caption information having the program ID "xx11" and the output point (relative output time in the program) "t(2)" (information having the caption ID "PN02", the program ID "xx11", the output point "t(2)", and the caption content "bbb...,") from the caption information shown in FIG. 9. The second transmitting unit 404 transmits the acquired caption information to the program output apparatus 2.

On the other hand, if the received assistance information transmission instruction contains a caption ID, the second processing unit 403 searches the caption information stored in the second storage unit 401, and acquires assistance information corresponding to the program ID "xx11" contained in the assistance information transmission instruction, and a next caption ID following the caption ID contained in the assistance information transmission instruction.

In the example in FIG. 11, if the received assistance information transmission instruction contains the caption ID "PN02", the second processing unit 403 acquires caption information having the next caption ID "PN03" following the caption ID "PN02" and the program ID "xxll" (information having the caption ID "PN03", the program ID "xxll", the output point "t(3)", and the caption content "ccc.... ") from the second storage unit 401. The second transmitting unit 404 transmits the acquired caption information to the program output apparatus 2.

Each time the assistance information is transmitted from the second server 4, the assistance information acquiring unit 206 acquires the assistance information, as the assistance information that is to be output together with the program that has the program name "AAA" and that is being received by the program receiving unit 201, and stores the information in a buffer memory.

In the example in FIG. 11, the assistance information acquiring unit 206 sequentially acquires pieces of assistance information having the caption IDs "PN02" to "PN50", and stores these pieces of information in the buffer memory.

If output of the program is started by the program receiving unit 201 and the program output part 2071 of the output unit 207 at the time Tₐ, the assistance information output part 2072 of the output unit 207 monitors whether or not there is caption information whose output point matches the current time, among the one or at least two pieces of caption information stored in the buffer memory. If there is caption information whose output point matches the current time, the assistance information output part 2072 reads and outputs the caption information from the buffer memory.

In the example in FIG. 11, if the current time is between the receiving start time Tₐ and the appearance time t(2) in the scene S(2), there is no caption information whose output point matches the current time among the one or at least two pieces of caption information stored in the buffer memory, and thus the assistance information output part 2072 does not perform the process that outputs the caption information.

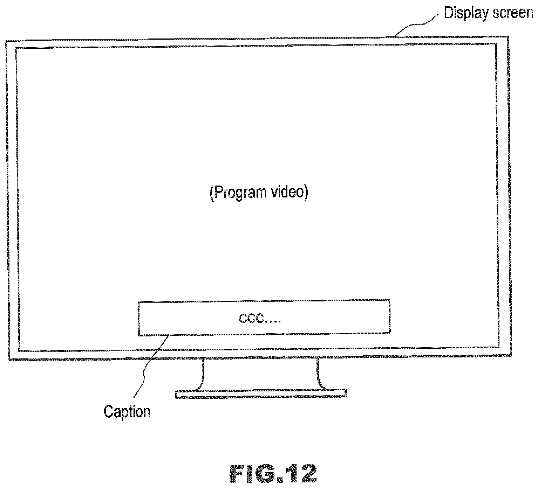

Subsequently, if the current time reaches the appearance time t(2) in the scene S(2), the output point "t(2)" of the caption information having the caption ID "PN02" among the one or at least two pieces of caption information stored in the buffer memory matches the current time, and thus the assistance information output part 2072 reads the caption content "bbb...," with the caption ID "PN02" having the caption ID "PN02" and output point "t(2)" from the buffer memory. As shown in FIG. 12, the assistance information output part 2072 outputs the caption content to a display screen on which video in the scene S(2) of the program is being output, such that the caption content is superimposed on the video, for example, using output techniques such as superimposition. If the output of the video in the scene S(2) of the program is ended, the assistance information output part 2072 ends the process that outputs the caption content "bbb...," with the caption ID "PN02".

Subsequently, the assistance information output part 2072 monitors whether or not the current time during the program output reaches the video appearance times t(3), t(4), ... of the scenes S(3), S(4), .... Each time the current time during the program output reaches the video appearance time t(3), t(4), ... of the scene S(3), S(4), ..., the assistance information output part 2072 reads the caption content with the caption ID "PN03", "PN04", ... having the output point that matches the appearance time t(3), t(4), ... from the buffer memory. As shown in FIG. 12, the assistance information output part 2072 outputs the read caption content "ccc....", ... with the caption ID "PN03", "PN04", ... such that the caption content is superimposed on the video in the scene S(3), S(4), ... of the program.

In the foregoing specific example, the pieces of caption information with the caption IDs "PN02", "PN04", ... "PN50" corresponding to the program ID "xx11" are acquired in order of output points from the second server 4, but these pieces of caption information may be collectively acquired from the second server 4 during the process that acquires the caption information for the first time.

Although the foregoing specific example was described using caption information as an example, also in the case of assistance information such as sign language information, Emoji information, assistance audio, or the like, it is possible to output one or more pieces of assistance information together with the program, in association with scenes of the program, by performing similar output control.

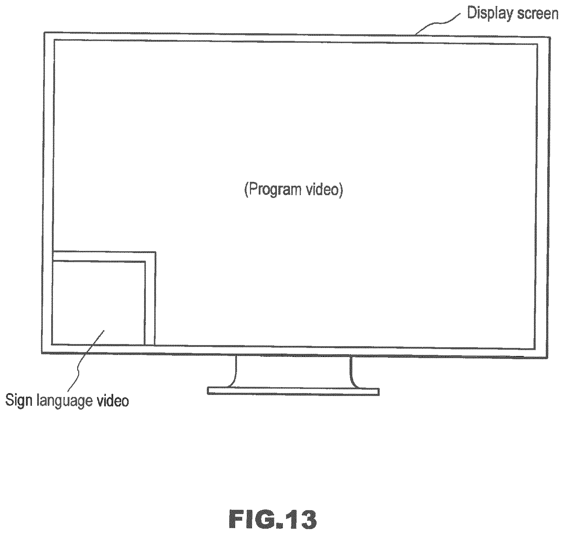

In the case of sign language information, as shown in FIG. 13, the assistance information output part 2072 divides the display screen, thereby allocating part of the screen to sign language video and outputting the sign language video to that portion, such that the sign language video does not overlap the program video. In the case of Emoji information, the assistance information output part 2072 may output Emojis so as to be superimposed on the program video, or may output Emojis so as to be separate from the program video.

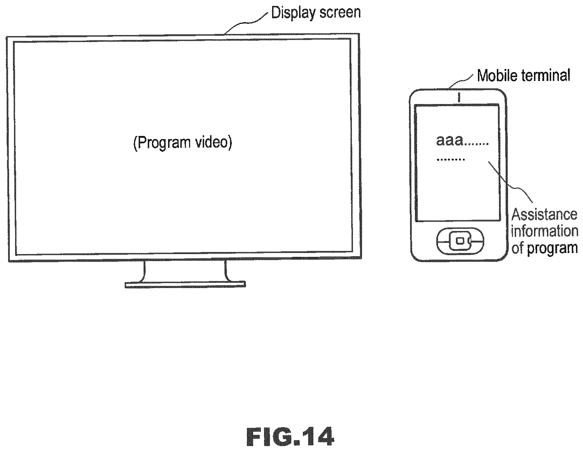

In the foregoing specific example, a program and assistance information are output to the same screen, but, as shown in FIG. 14, a program may be output to a display screen of the program output apparatus 2 and assistance information may be output to another apparatus such as a mobile terminal.

In the foregoing embodiment, program management information is stored in the first server 3, and the program output apparatus 2 communicates with the first server 3 and acquires program identifying information of a program that is being received, but, for example, the program output apparatus 2 may acquire an electronic program guide (EPG) from a broadcast station from which a program is received, and acquire program identifying information of a program that is currently being received, from the electronic program guide. In this case, the procedure for transmitting a channel identifier and the current time to the first server 3, the procedure for receiving program identifying information corresponding to the channel identifier and the current time from the first server 3, and the like are not necessary, which is advantageous in that program identifying information can be easily acquired.

In the foregoing specific example, upon starting to receive a program, the program output apparatus 2 acquires assistance information associated with the program from the second server 4, but, when the program output apparatus 2 is turned on and starts to receive a program, the program output apparatus 2 may acquire all pieces of assistance information associated with programs that can be received on the channel number on which broadcasting is being received thereby. Alternatively, the program output apparatus 2 may acquire all pieces of assistance information associated with programs that are broadcasted and can be received on all channels. This configuration is advantageous in that, if a program that is being received is ended and a program on the same channel or another channel is continuously received, the process that acquires assistance information associated with the program is not necessary.

Although the foregoing specific example was described using an example in which the program output apparatus 2 acquires only caption information from the second server 4 and outputs the information together with the program that is being received, if other types of assistance information such as sign language information, Emoji information, assistance audio information, and the like are prepared for the program that is being received by the program output apparatus 2 in addition to the caption information, the program output apparatus 2 may perform a process that acquires these pieces of assistance information as well when starting to receiving the program, and output, together with the program, the multiple types of assistance information such as caption information and sign language information.

In this case, the second server 4 may manage multiple types of assistance information, and the program output apparatus 2 may acquire multiple types of assistance information associated with the program that is being received thereby, from the second server 4. Multiple types of assistance information may be managed by servers that are different depending on the types, and the program output apparatus 2 may acquire multiple types of assistance information associated with the program that is being received thereby, from servers respectively corresponding to the types.

For example, if the second server 4 that manages assistance information includes a second server 4A that manages sign language information and a second server 4B that manages caption information, upon starting to receive a program, the program output apparatus 2 may acquire program identifying information of the program, and then access the second server 4A and the second server 4B to acquire sign language information and caption information associated with the program, and output, together with the program, the sign language information and the caption information. There is no limitation on the order in which the program output apparatus 2 accesses the second server 4A and the second server 4B.

As described above, according to this embodiment, if assistance information associated with a program is provided separately from the program, the program output apparatus can acquire the assistance information and output the assistance information associated with the program, together with the program that is being received. That is to say, a program provider (broadcast station) for providing a program, a program management organization for managing program management information, and an assistance information provider for providing assistance information can form a program system in which it is possible to view a program to which no assistance information is attached, while causing the program output apparatus side to add assistance information to the program.

According to this embodiment, regarding a program to which no assistance information is attached, it is possible to cause the program output apparatus side to output the program and assistance information corresponding to the program, without changing the conventional configuration of the broadcast station side, so that it is possible to form a program system that can provide highly accessible assistance information.

According to this embodiment, if the assistance information has the content for assisting people with visual and hearing disabilities, elderly people with impaired vision or hearing, and the like, with viewing, it is possible to assist people with visual and hearing disabilities and the like, with viewing a program. If the assistance information is information related to the content of the program, it is possible to assist able-bodied people as well with viewing the program.

The processing in the program output apparatus 2, the first server 3, and the second server 4 in this embodiment may be realized by software. The software may be distributed by software downloads or the like. Furthermore, the software may be distributed in a form where the software is stored in a storage medium such as a CD-ROM.

The software that realizes the program output apparatus 2 in this embodiment is the following sort of program.

Specifically, this program is a program for causing a computer controlled thereby to execute a program output apparatus that is communicably connected to: a program management server in which one or at least two pieces of program management information each having program identifying information for identifying a program and a channel identifier of the program are stored; and an assistance information management server in which one or more pieces of assistance information associated with the program identifying information are stored, the program causing the computer to function as: a program receiving unit that receives a program; a channel identifier acquiring unit that acquires a channel identifier of the program that is being received; a program specifying information transmitting unit that transmits program specifying information containing the channel identifier acquired by the channel identifier acquiring unit, to the program management server; a program identifying information receiving unit that, in response to transmission of the program specifying information, receives program identifying information from the program management server; an assistance information transmission instruction transmitting unit that transmits an assistance information transmission instruction having the program identifying information received by the program identifying information receiving unit, to the assistance information management server; an assistance information receiving unit that, in response to transmission of the assistance information transmission instruction, receives assistance information corresponding to the program identifying information contained in the assistance information transmission instruction, from the assistance information management server; and an output unit that outputs the program received by the program receiving unit and the assistance information received by the assistance information receiving unit.

Furthermore, the program for realizing the program output apparatus 2 may be configured such that the assistance information is one or more types of information selected from the group consisting of captions, sign language video, Emojis, and assistance audio corresponding to the program.

The software that realizes the first server 3 in this embodiment is the following sort of program.

Specifically, this program is a program used in a state where one or at least two pieces of program management information each having program identifying information for identifying a program, a channel identifier of the program, and broadcast timeslot information indicating a timeslot during which the program is broadcasted are stored in a storage medium, the program causing a computer to function as: a first receiving unit that receives program specifying information containing a channel identifier of a program, from a program output apparatus; a first processing unit that acquires program identifying information corresponding to the channel identifier contained in the program specifying information and current time, from the storage medium; and a first transmitting unit that transmits the program identifying information acquired by the first processing unit, to the program output apparatus.

The program for realizing the first server 3 may be configured such that the first receiving unit receives change information, which is information for changing program identifying information contained in program management information, from an external apparatus, and the first processing unit changes program identifying information contained in program specifying information corresponding to the change information.

The software that realizes the second server 4 in this embodiment is the following sort of program.

Specifically, this program is a program used in a state where one or more pieces of assistance information associated with program identifying information are stored in a storage medium, the program causing a computer to function as: a second receiving unit that receives an assistance information transmission instruction having program identifying information, from a program output apparatus; a second processing unit that acquires assistance information corresponding to the program identifying information contained in the assistance information transmission instruction, from the storage medium; and a second transmitting unit that transmits the assistance information acquired by the second processing unit, to the program output apparatus.

The program for realizing the second server 4 may be configured such that the assistance information transmission instruction has the program identifying information, and point information indicating an assistance information output point in a program identified by the program identifying information, the assistance information stored in the storage medium is associated with the point information, and the second processing unit acquires assistance information corresponding to the program identifying information and the point information contained in the assistance information transmission instruction, from the storage medium.

Furthermore, the program for realizing the second server 4 may be configured such that the second transmitting unit transmits the assistance information acquired by the second processing unit and an assistance information identifier for identifying the assistance information, to the program output apparatus, the second receiving unit receives an assistance information transmission instruction having the program identifying information and the assistance information identifier from the program output apparatus, and the second processing unit acquires a next piece of assistance information following the assistance information identified by the assistance information identifier, the assistance information corresponding to the program identifying information contained in the assistance information transmission instruction.

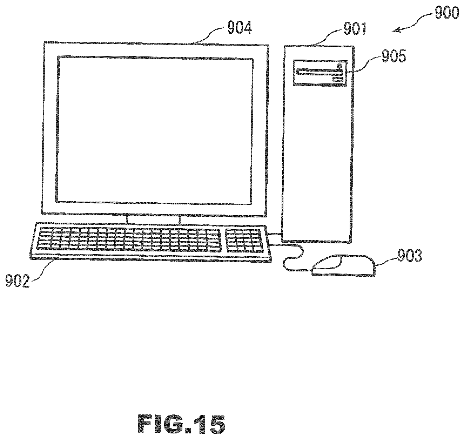

FIG. 15 is a schematic view showing an example of an external view of a computer that executes the programs described above to realize the program output apparatus 2, the first server 3, and the second server 4 in the foregoing embodiment. The foregoing embodiment may be realized using computer hardware and computer programs executed thereon.

In FIG. 15, a computer system 900 includes a computer 901 including a CD-ROM drive 905, a keyboard 902, a mouse 903, and a monitor 904.

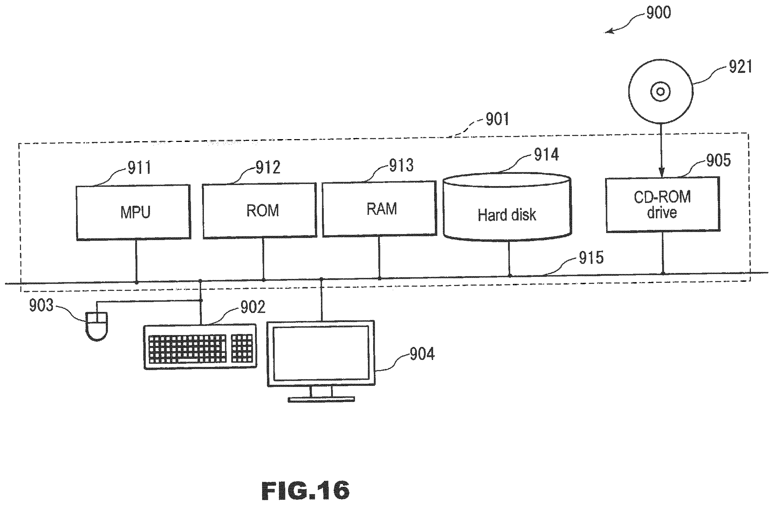

FIG. 16 is a diagram showing an internal configuration of the computer system 900. In FIG. 16, the computer 901 includes, in addition to the CD-ROM drive 905, an MPU (micro processing unit) 911, a ROM 912 in which a program such as a boot up program is to be stored, a RAM 913 in which a command of an application program is temporarily stored and a temporary storage area is provided, a hard disk 914 in which an application program, a system program, and data are stored, and a bus 915 that connects the MPU 911, the ROM 912, the RAM 913, and the like. Note that the computer 901 may include an unshown network card for providing a connection to a LAN, a WAN, and the like.

The program for causing the computer system 900 to execute the functions of the program output apparatus 2, the first server 3, and the second server 4 in the foregoing embodiment may be stored in a CD-ROM 921, and the CD-ROM 921 may be inserted into the CD-ROM drive 905, and read on the hard disk 914. Alternatively, the program may be transmitted via an unshown network to the computer 901 and stored in the hard disk 914. At the time of execution, the program is loaded into the RAM 913. The program may be loaded from the CD-ROM 921, or directly from a network. The program may be read on the computer system 900 via another storage medium (e.g., a DVD, etc.) instead of the CD-ROM 921.

The program does not necessarily have to include, for example, an operating system (OS) or a third party program to cause the computer 901 to execute the functions of the program output apparatus 2, the first server 3, and the second server 4 in the foregoing embodiment. The program may only include a command portion to call an appropriate function or module in a controlled mode and obtain desired results. The manner in which the computer system 900 operates is well known, and thus a detailed description thereof has been omitted.

In the program, in a transmitting step of transmitting information, a receiving step of receiving information, or the like, processing that is performed by hardware, for example, processing performed by a modem or an interface card in the transmitting step (processing that can be performed only by hardware) is not included.

The computer that executes this program may be a single computer, or may be multiple computers. That is to say, the program may be executed by centralized processing or by distributed processing.

In the foregoing embodiment, it will be appreciated that two or more communication parts in one apparatus may be physically realized by one medium.

In the foregoing embodiment, each process (each function) may be realized as centralized processing using a single apparatus (system), or may be realized as distributed processing using multiple apparatuses.

The present invention is not limited to the embodiment set forth herein. Various modifications are possible within the scope of the invention as set out in the attached claims.

### Industrial Applicability

As described above, the program system according to the present invention has an effect that, if assistance information associated with a program is provided separately from the program, the program output apparatus can acquire the assistance information and output the assistance information associated with the program, together with the program that is being received. That is to say, the program system according to the present invention has an effect that, regarding a program to which no assistance information is attached, it is possible to cause the program output apparatus side to output the program and assistance information, without changing the conventional program providing configuration of the broadcast station side. Accordingly, the program system is capable of assisting a viewer with viewing a program.

In particular, if the assistance information has the content for assisting people with visual and hearing disabilities and the like, with viewing, the program system according to the present invention is capable of assisting people with visual and hearing disabilities the like, with viewing a program.

## Claims

1. A program system (1) including a first server (3), a second server (4), and two or more program output apparatuses (2),
wherein the first server (3) comprises:
a first storage unit (301) in which one or at least two pieces of program management information each having program identifying information for identifying a program, a channel identifier for identifying a channel on which the program is broadcasted, and broadcast timeslot information indicating a timeslot during which the program is broadcasted are stored;
a first receiving unit (302) that receives program specifying information containing a channel identifier of a program, from the program output apparatus (2);
a first processing unit (303) that acquires program identifying information corresponding to the channel identifier contained in the program specifying information and current time, from the first storage unit (301); and
a first transmitting unit (304) that transmits the program identifying information acquired by the first processing unit (303), to the program output apparatus (2),
the second server (4) comprises:
a second storage unit (401) in which one or more pieces of assistance information associated with program identifying information are stored, the assistance information being one or more types of information selected from the group consisting of captions, sign language video, Emojis, and assistance audio corresponding to the program;
a second receiving unit (402) that receives an assistance information transmission instruction having program identifying information, from the program output apparatus (2);
a second processing unit (403) that acquires assistance information corresponding to the program identifying information contained in the assistance information transmission instruction, from the second storage unit (401); and
a second transmitting unit (404) that transmits the assistance information acquired by the second processing unit (403), to the program output apparatus (2), and
each of the program output apparatuses (2) comprises:
a program receiving unit (201) that receives a program;
a channel identifier acquiring unit (202) that acquires a channel identifier of the program that is being received by the program receiving unit (201);
a program specifying information transmitting unit (203) that transmits program specifying information containing the channel identifier, to the first server (3);
a program identifying information acquiring unit (204) that, in response to transmission of the program specifying information, receives program identifying information from the first server (3);
an assistance information transmission instruction transmitting unit (205) that transmits an assistance information transmission instruction having the program identifying information received by the program identifying information acquiring unit (204), to the second server (4);
an assistance information acquiring unit (206) that, in response to transmission of the assistance information transmission instruction, receives assistance information corresponding to the program identifying information contained in the assistance information transmission instruction, from the second server (4); and
an output unit (207) that outputs the program received by the program receiving unit (201) and the assistance information received by the assistance information acquiring unit (206), wherein
at the second server (4),
the second transmitting unit (404) is adapted to transmit the assistance information acquired by the second processing unit (403) and an assistance information identifier for identifying the assistance information, to the program output apparatus (2),
at the program output apparatus (2),
the assistance information transmission instruction transmitting unit (205) is adapted to transmit an assistance information transmission instruction having the program identifying information received by the program identifying information acquiring unit (204) and the assistance information identifier transmitted from the second server (4), to the second server (4),
at the second server (4),
the second processing unit (403) is adapted to acquire a next piece of assistance information following the assistance information identified by the received assistance information identifier, the assistance information corresponding to the program identifying information contained in the assistance information transmission instruction, and
the second transmitting unit (404) is adapted to transmit the next piece of assistance information acquired by the second processing unit (403) and a next assistance information identifier following the assistance information identifier contained in the assistance information transmission instruction, to the program output apparatus (2).

2. The program system according to claim 1, wherein
at the second server (4),
the second processing unit (403) is adapted to determine whether or not the assistance information transmission instruction received by the second receiving unit (402) contains an assistance information identifier,
if it is determined that the assistance information transmission instruction does not contain an assistance information identifier, the second processing unit (403) is adapted to acquire current time, and determine assistance information corresponding to the program identifying information contained in the assistance information transmission instruction received by the second receiving unit (402) and to the acquired current time,
if it is determined that the assistance information transmission instruction contains an assistance information identifier, the second processing unit (403) is adapted to determine assistance information corresponding to the program identifying information contained in the assistance information transmission instruction received by the second receiving unit (402) and to a next assistance information identifier following the assistance information identifier contained in the assistance information transmission instruction,
at the program output apparatus (2),
the assistance information transmission instruction transmitting unit (205) is adapted to transmit, as a transmission instruction of a first piece of assistance information, an assistance information transmission instruction having i) the program identifying information, to the second server (4), and
the assistance information transmission instruction transmitting unit (205) is adapted to transmit, as transmission instructions of second and subsequent pieces of assistance information, assistance information transmission instructions each having i) the program identifying information received by the program identifying information acquiring unit (204) and ii) the assistance information identifier transmitted from the second server (4), to the second server (4).

3. The program system according to claim 1 or 2,
wherein the assistance information transmission instruction has the program identifying information, and point information indicating an assistance information output point in the program identified by the program identifying information,
the assistance information in the second storage unit (401) is associated with the point information, and
the second processing unit (403) is adapted to acquire assistance information corresponding to the program identifying information and the point information contained in the assistance information transmission instruction, from the second storage unit (401).

4. The program system according to any one of claims 1 to 3, wherein the first server (3) and the second server (4) are different apparatuses.

5. The program system according to any one of claims 1 to 3,
wherein at the first server (3),
the first receiving unit (302) is adapted to receive change information, which is information for changing program identifying information contained in program management information stored in the first storage unit (301), from an external apparatus, and
the first processing unit (303) is adapted to change program identifying information contained in program specifying information corresponding to the change information.

## Patentansprüche

1. Programmsystem (1), das einen ersten Server (3), einen zweiten Server (4) und zwei oder mehr Programm-Ausgabevorrichtungen (2) enthält,
wobei der erste Server (3) umfasst:
eine erste Speichereinheit (301), in welcher ein oder wenigstens zwei Stücke von Programm-Managementinformation mit jeweils Programm-Identifizierungsinformation zum Identifizieren eines Programms, einem Kanalidentifizierer zum Identifizieren eines Kanals, auf welchem das Programm ausgestrahlt wird, und Ausstrahlungs-Zeitschlitzinformation, die einen Zeitschlitz anzeigt, während welchem das Programm ausgestrahlt wird, gespeichert ist oder sind;
eine erste Empfangseinheit (302), die einen Kanalidentifizierer eines Programms enthaltende Programm-Spezifizierungsinformation von der Programm-Ausgabevorrichtung (2) empfängt;
eine erste Verarbeitungseinheit (303), die Programm-Identifizierungsinformation entsprechend dem in der Programm-Identifizierungsinformation enthaltenen Kanalidentifizierer und eine aktuelle Zeit von der ersten Speichereinheit (301) erlangt; und
eine erste Sendeeinheit (304), die die durch die erste Verarbeitungseinheit (303) erlangte Programm-Identifizierungsinformation zur Programm-Ausgabevorrichtung (2) sendet,
der zweite Server (4) umfasst:
eine zweite Speichereinheit (401), in welcher ein oder mehrere Stücke von mit der Programm-Identifizierungsinformation assoziierter Hilfsinformation gespeichert ist oder sind, wobei die Hilfsinformation ein oder mehrere Typen von Information ist, die aus der Gruppe ausgewählt ist, die aus Untertiteln, Zeichensprachenvideos, Emojis und Hilfsaudio entsprechend dem Programm besteht;
eine zweite Empfangseinheit (402), die eine Hilfsinformations-Sendeanweisung mit Programm-Identifizierungsinformation von der Programm-Ausgabevorrichtung (2) empfängt;
eine zweite Verarbeitungseinheit (403), die Hilfsinformation entsprechend der in der Hilfsinformations-Sendeanweisung enthaltenen Programm-Identifizierungsinformation von der zweiten Speichereinheit (401) erlangt; und
eine zweite Sendeeinheit (404), die die durch die zweite Verarbeitungseinheit (403) erlangte Hilfsinformation zur Programm-Ausgabevorrichtung (2) sendet, und
jede der Programm-Ausgabevorrichtungen (2) umfasst:
eine Programm-Empfangseinheit (201), die ein Programm empfängt;
eine Kanalidentifizierer-Erlangungseinheit (202), die einen Kanalidentifizierer des Programms erlangt, das gerade durch die Programm-Empfangseinheit (201) empfangen wird;
eine Programm-Spezifizierungsinformations-Sendeeinheit (203), die den Kanalidentifizierer enthaltende Programm-Spezifizierungsinformation zum ersten Server (3) sendet;
eine Programm-Identifizierungsinformations-Erlangungseinheit (204), die in Antwort auf ein Senden der Programm-Spezifizierungsinformation Programm-Identifizierungsinformation vom ersten Server (3) empfängt;
eine Hilfsinformations-Sendeanweisungs-Sendeeinheit (205), die eine Hilfsinformations-Sendeanweisung mit der durch die Programm-Identifizierungsinformations-Erlangungseinheit (204) empfangenen Programm-Identifizierungsinformation zum zweiten Server (4) sendet;
eine Hilfsinformations-Erlangungseinheit (206), die in Antwort auf ein Senden der Hilfsinformations-Sendeanweisung Hilfsinformation entsprechend der in der Hilfsinformations-Sendeanweisung enthaltenen Programm-Identifizierungsinformation vom zweiten Server (4) empfängt; und
eine Ausgabeeinheit (207), die das durch die Programm-Empfangseinheit (201) empfangene Programm und die durch die Hilfsinformations-Erlangungseinheit (206) empfangene Hilfsinformation ausgibt, wobei
beim zweiten Server (4)
die zweite Sendeeinheit (404) dazu geeignet ist, die durch die zweite Verarbeitungseinheit (403) erlangte Hilfsinformation und einen Hilfsinformations-Identifizierer zum Identifizieren der Hilfsinformation zur Programm-Ausgabevorrichtung (2) zu senden,
bei der Programm-Ausgabevorrichtung (2)
die Hilfsinformations-Sendeanweisungs-Sendeeinheit (205) dazu geeignet ist, eine Hilfsinformations-Sendeanweisung mit der durch die Programm-Identifizierungsinformations-Erlangungseinheit (204) empfangenen Programm-Identifizierungsinformation und dem vom zweiten Server (4) gesendeten Hilfsinformations-Identifizierer zum zweiten Server (4) zu senden,
beim zweiten Server (4)
die zweite Verarbeitungseinheit (403) dazu geeignet ist, ein nächstes Stück von Hilfsinformation folgend der durch den empfangenen Hilfsinformations-Identifizierer identifizierten Hilfsinformation zu erlangen, wobei die Hilfsinformation der in der Hilfsinformations-Sendeanweisung enthaltenen Programm-Identifizierungsinformation entspricht, und
die zweite Sendeeinheit (404) dazu geeignet ist, das nächste Stück von durch die zweite Verarbeitungseinheit (403) erlangter Hilfsinformation und einen nächsten Hilfsinformations-Identifizierer folgend dem in der Hilfsinformations-Sendeanweisung enthaltenen Hilfsinformations-Identifizierer zur Programm-Ausgabevorrichtung (2) zu senden.

2. Programmsystem nach Anspruch 1, wobei
beim zweiten Server (4)
die zweite Verarbeitungseinheit (403) dazu geeignet ist, zu bestimmen, ob die durch die zweite Empfangseinheit (402) empfangene Hilfsinformations-Sendeanweisung einen Hilfsinformations-Identifizierer enthält oder nicht,
wenn bestimmt wird, dass die Hilfsinformations-Sendeanweisung keinen Hilfsinformations-Identifizierer enthält, die zweite Verarbeitungseinheit (403) dazu geeignet ist, eine aktuelle Zeit zu erlangen und Hilfsinformation entsprechend der in der durch die zweite Empfangseinheit (402) und zur erlangten aktuellen Zeit empfangenen Hilfsinformations-Sendeanweisung enthaltenen Programm-Identifizierungsinformation zu bestimmen,
wenn bestimmt wird, dass die Hilfsinformations-Sendeanweisung einen Hilfsinformations-Identifizierer enthält, die zweite Verarbeitungseinheit (403) dazu geeignet ist, Hilfsinformation entsprechend der in der durch die zweite Empfangseinheit (402) empfangenen Hilfsinformations-Sendeanweisung enthaltenen Programm-Identifizierungsinformation und einem nächsten Hilfsinformations-Identifizierer folgend dem in der Hilfsinformations-Sendeanweisung enthaltenen Hilfsinformations-Identifizierer zu bestimmen,
bei der Programm-Ausgabevorrichtung (2)
die Hilfsinformations-Sendeanweisungs-Sendeeinheit (205) dazu geeignet ist, als eine Sendeanweisung eines ersten Stücks von Hilfsinformation eine Hilfsinformations-Sendeanweisung mit i) der Programm-Identifizierungsinformation zum zweiten Server (4) zu senden, und
die Hilfsinformations-Sendeanweisungs-Sendeeinheit (205) dazu geeignet ist, als Sendeanweisungen eines zweiten und nachfolgender Stücke von Hilfsinformation Hilfsinformations-Sendeanweisungen mit jeweils i) der durch die Programm-Identifizierungsinformations-Erlangungseinheit (204) empfangenen Programm-Identifizierungsinformation und ii) dem vom zweiten Server (4) gesendeten Hilfsinformations-Identifizierer zum zweiten Server (4) zu senden.

3. Programmsystem nach Anspruch 1 oder 2,
wobei die Hilfsinformationssendeanweisung die Programm-Identifizierungsinformation und Stelleninformation, die eine Hilfsinformations-Ausgabestelle im durch die Programm-Identifizierungsinformation identifizierten Programm anzeigt, hat,
die Hilfsinformation in der zweiten Speichereinheit (401) mit der Stelleninformation assoziiert ist, und
die zweite Verarbeitungseinheit (403) dazu geeignet ist, Hilfsinformation entsprechend der Programm-Identifizierungsinformation und der Stelleninformation, die in der Hilfsinformations-Sendeanweisung enthalten sind, von der zweiten Speichereinheit (401) zu erlangen.

4. Programmsystem nach einem der Ansprüche 1 bis 3, wobei der erste Server (3) und der zweite Server (4) unterschiedliche Vorrichtungen sind.

5. Programmsystem nach einem der Ansprüche 1 bis 3,
wobei beim ersten Server (3)
die erste Empfangseinheit (302) dazu geeignet ist, Änderungsinformation, welche Information zum Ändern von Programm-Identifizierungsinformation ist, die in Programm-Managementinformation enthalten ist, die in der ersten Speichereinheit (301) gespeichert ist, von einer externen Vorrichtung zu empfangen, und
die erste Verarbeitungseinheit (303) dazu geeignet ist, Programm-Identifizierungsinformation, die in Programm-Spezifizierungsinformation enthalten ist, entsprechend der Änderungsinformation zu ändern.

## Revendications

1. Système de programme (1) incluant un premier serveur (3), un second serveur (4), et deux appareils de sortie de programme ou plus (2),
dans lequel le premier serveur (3) comprend :
une première unité de stockage (301) dans laquelle un ou au moins deux éléments d'informations de gestion de programme ayant chacun des informations d'identification de programme pour identifier un programme, un identificateur de canal pour identifier un canal sur lequel le programme est diffusé, et des informations de créneau temporel de diffusion indiquant un créneau temporel pendant lequel le programme est diffusé sont stockés ;
une première unité de réception (302) qui reçoit des informations de spécification de programme contenant un identificateur de canal d'un programme, en provenance de l'appareil de sortie de programme (2) ;
une première unité de traitement (303) qui acquiert des informations d'identification de programme correspondant à l'identificateur de canal contenu dans les informations de spécification de programme et l'heure actuelle, à partir de la première unité de stockage (301) ; et
une première unité de transmission (304) qui transmet les informations d'identification de programme acquises par la première unité de traitement (303), à l'appareil de sortie de programme (2),
le second serveur (4) comprend :
une seconde unité de stockage (401) dans laquelle un ou plusieurs éléments d'informations d'assistance associées à des informations d'identification de programme sont stockés, les informations d'assistance étant un ou plusieurs types d'informations sélectionnés dans le groupe constitué de sous-titres, vidéo en langue des signes, Emojis, et audio assistance correspondant au programme ;
une seconde unité de réception (402) qui reçoit une instruction de transmission d'informations d'assistance ayant des informations d'identification de programme, en provenance de l'appareil de sortie de programme (2) ;
une seconde unité de traitement (403) qui acquiert des informations d'assistance correspondant aux informations d'identification de programme contenues dans l'instruction de transmission d'informations d'assistance, à partir de la seconde unité de stockage (401) ; et
une seconde unité de transmission (404) qui transmet les informations d'assistance acquises par la seconde unité de traitement (403), à l'appareil de sortie de programme (2), et
chacun des appareils de sortie de programme (2) comprend :
une unité de réception de programme (201) qui reçoit un programme ;
une unité d'acquisition d'identificateur de canal (202) qui acquiert un identificateur de canal du programme qui est reçu par l'unité de réception de programme (201) ;
une unité de transmission d'informations de spécification de programme (203) qui transmet des informations de spécification de programme contenant l'identificateur de canal, au premier serveur (3) ;
une unité d'acquisition d'informations d'identification de programme (204) qui, en réponse à la transmission des informations de spécification de programme, reçoit des informations d'identification de programme en provenance du premier serveur (3) ;
une unité de transmission d'instruction de transmission d'informations d'assistance (205) qui transmet une instruction de transmission d'informations d'assistance ayant les informations d'identification de programme reçues par l'unité d'acquisition d'informations d'identification de programme (204), au second serveur (4) ;
une unité d'acquisition d'informations d'assistance (206) qui, en réponse à la transmission de l'instruction de transmission d'informations d'assistance, reçoit des informations d'assistance correspondant aux informations d'identification de programme contenues dans l'instruction de transmission d'informations d'assistance, en provenance du second serveur (4) ; et
une unité de sortie (207) qui sort le programme reçu par l'unité de réception de programme (201) et les informations d'assistance reçues par l'unité d'acquisition d'informations d'assistance (206), où
au niveau du second serveur (4),
la seconde unité de transmission (404) est adaptée pour transmettre les informations d'assistance acquises par la seconde unité de traitement (403) et un identificateur d'informations de programme pour identifier les informations d'assistance, à l'appareil de sortie de programme (2),
au niveau de l'appareil de sortie de programme (2),
l'unité de transmission d'instruction de transmission d'informations d'assistance (205) est adaptée pour transmettre une instruction de transmission d'informations d'assistance ayant les informations d'identification de programme reçues par l'unité d'acquisition d'informations d'identification de programme (204) et l'identificateur d'informations d'assistance transmis depuis le second serveur (4), au second serveur (4),
au niveau du second serveur (4),
la seconde unité de traitement (403) est adaptée pour acquérir un prochain élément d'informations d'assistance suivant les informations d'assistance identifiées par l'identificateur d'informations d'assistance reçu, les informations d'assistance correspondant aux informations d'identification de programme contenues dans l'instruction de transmission d'informations d'assistance, et
la seconde unité de transmission (404) est adaptée pour transmettre le prochain élément d'informations d'assistance acquis par la seconde unité de traitement (403) et un prochain identificateur d'informations d'assistance suivant l'identificateur d'informations d'assistance contenu dans l'instruction de transmission d'informations d'assistance, à l'appareil de sortie de programme (2) .

2. Système de programme selon la revendication 1, dans lequel
au niveau du second serveur (4),
la seconde unité de traitement (403) est adaptée pour déterminer si oui ou non l'instruction de transmission d'informations d'assistance reçue par la seconde unité de réception (402) contient un identificateur d'informations d'assistance,
s'il est déterminé que l'instruction de transmission d'informations d'assistance ne contient pas d'identificateur d'informations d'assistance, la seconde unité de traitement (403) est adaptée pour acquérir l'heure actuelle, et déterminer des informations d'assistance correspondant aux informations d'identification de programme contenues dans l'instruction de transmission d'informations d'assistance reçue par la seconde unité de réception (402) et à l'heure actuelle acquise,
s'il est déterminé que l'instruction de transmission d'informations d'assistance contient un identificateur d'informations d'assistance, la seconde unité de traitement (403) est adaptée pour déterminer des informations d'assistance correspondant aux informations d'identification de programme contenues dans l'instruction de transmission d'informations d'assistance reçue par la seconde unité de réception (402) et à un prochain identificateur d'informations d'assistance suivant l'identificateur d'informations d'assistance contenu dans l'instruction de transmission d'informations d'assistance,
au niveau de l'appareil de sortie de programme (2),
l'unité de transmission d'instruction de transmission d'informations d'assistance (205) est adaptée pour transmettre, comme une instruction de transmission d'un premier élément d'informations d'assistance, une instruction de transmission d'informations d'assistance ayant i) les informations d'identification de programme, au second serveur (4), et
l'unité de transmission d'instruction de transmission d'informations d'assistance (205) est adaptée pour transmettre, comme des instructions de transmission d'un deuxième élément et d'éléments subséquents d'informations d'assistance, des instructions de transmission d'informations d'assistance ayant chacune i) les informations d'identification de programme reçues par l'unité d'acquisition d'informations d'identification de programme (204) et ii) l'identificateur d'informations d'assistance transmis depuis le second serveur (4), au second serveur (4).

3. Système de programme selon la revendication 1 ou 2,
dans lequel l'instruction de transmission d'informations d'assistance a les informations d'identification de programme, et des informations de point indiquant un point de sortie d'informations d'assistance dans le programme identifié par les informations d'identification de programme,
les informations d'assistance dans la seconde unité de stockage (401) sont associées aux informations de point, et
la seconde unité de traitement (403) est adaptée pour acquérir des informations d'assistance correspondant aux informations d'identification de programme et aux informations de point contenues dans l'instruction de transmission d'informations d'assistance, à partir de la seconde unité de stockage (401).

4. Système de programme selon l'une quelconque des revendications 1 à 3, dans lequel le premier serveur (3) et le second serveur (4) sont des appareils différents.

5. Système de programme selon l'une quelconque des revendications 1 à 3,
dans lequel au niveau du premier serveur (3),
la première unité de réception (302) est adaptée pour recevoir des informations de changement, qui sont des informations pour changer des informations d'identification de programme contenues dans des informations de gestion de programme stockées dans la première unité de stockage (301), en provenance d'un appareil externe, et
la première unité de traitement (303) est adaptée pour changer des informations d'identification de programme contenues dans des informations de spécification de programme correspondant aux informations de changement.
